# EUROPÄISCHE PATENTANMELDUNG

(11) **EP 4 137 019 A1**
(43) Veröffentlichungstag der Anmeldung: **22.02.2023**
(21) Anmeldenummer: 21192449.3
(22) Anmeldetag: 20.08.2021
(51) Int. Cl.: A47J 43/07

(54) **KÜCHENGERÄTEBASIS, ZUBEREITUNGSMODUL UND KÜCHENGERÄT**

(71) Anmelder: Vorwerk & Co. Interholding GmbH, 42270 Wuppertal (DE)
(72) Erfinder: BAYARD, Christian, 58456 Witten (DE)
(74) Vertreter: Dr. Solf & Zapf Patent- und Rechtsanwalts PartG mbB

(57) **Zusammenfassung**

Die vorliegende Erfindung betrifft eine Küchengerätebasis (2), mit mindestens einem Aufnahmebereich (4) für mindestens ein Zubereitungsmodul (3), wobei der Aufnahmebereich (4) mindestens ein Verriegelungsmittel (9) zum mechanischen Verriegeln des Zubereitungsmoduls (3) aufweist.

Eine Küchengerätebasis (2), ein Zubereitungsmodul (1) und ein Küchengerät (1), mit denen eine automatische Verriegelung von unterschiedlichen Zubereitungsmodulen auf einer Küchengerätebasis ermöglicht ist, werden dadurch realisiert, dass das Verriegelungsmittel (9) mindestens eine Antriebseinheit (10) und mindestens ein bewegbar gehaltenes Verriegelungselement (11) aufweist, dass das Verriegelungselement (11) zumindest mittelbar mittels der Antriebseinheit (10) zumindest zwischen einer Freigabeposition und einer Verriegelungsposition bewegbar ist, dass in der Freigabeposition das Zubereitungsmodul (3) in mindestens zwei unterschiedlichen Ausrichtungen in dem Aufnahmebereich (4) anordenbar ist, und dass in der Verriegelungsposition eine Verriegelung des Zubereitungsmoduls (3) mit der Küchengerätebasis (2) bewirkt ist.

## Beschreibung

Die Erfindung betrifft eine Küchengerätebasis, mit mindestens einem Aufnahmebereich für mindestens ein Zubereitungsmodul. Die Erfindung betrifft ferner ein Zubereitungsmodul zum Anordnen in einem Aufnahmebereich einer Küchengerätebasis sowie ein Küchengerät, dass eine Küchengerätebasis sowie mindestens ein Zubereitungsmodul umfasst. Zum mechanischen Verriegeln des Zubereitungsmoduls mit der Küchengerätebasis weist die Küchengerätebasis mindestens ein Verriegelungsmittel auf.

Küchengeräte mit Küchengerätebasis und Zubereitungsmodul sind im Stand der Technik in einer Vielzahl von Ausgestaltungen bekannt. Derartige Küchengeräte dienen dem automatischen, teilautomatischen oder manuellen Zubereiten, z. B. Zerkleinern, Mahlen, Pressen, Rühren, Garen und/oder Warmhalten, insbesondere von Speisen. Das Küchengerät weist üblicherweise eine Küchengerätebasis auf, die einen Aufnahmebereich für mindestens ein Zubereitungsmodul bereitstellt. Der Aufnahmebereich weist häufig mindestens eine elektrische Schnittstelle auf, um ein in den Aufnahmebereich eingebrachtes Zubereitungsmodul mit mindestens einer Arbeitsspannung zu versorgen, beispielsweise für eine Heizeinrichtung, oder um beispielsweise Sensoren zu kontaktieren.

Alternativ oder zusätzlich ist im Aufnahmebereich mindestens eine Antriebsschnittstelle vorgesehen, die beispielsweise der Übertragung eines Drehmoments von einer Arbeitseinheit, z. B. eines Motors, der Küchengerätebasis beispielsweise auf ein an dem Zubereitungsmodul angeordnetes Werkzeug dient.

Zudem weist die Küchengerätebasis üblicherweise ein Verriegelungsmittel auf, um ein Entfernen des Zubereitungsmoduls nach dem Verriegeln mit der Küchengerätebasis zu verhindern. Das Verriegeln gewährleistet einen sicheren Arbeitsprozess und verhindert insbesondere ein versehentliches Entfernen des Zubereitungsmoduls während eines Arbeitsprozesses. Das Verriegeln erfolgt bei Küchengeräten oftmals manuell, indem zwischen Zubereitungsmodul und Küchengerätebasis ein Bajonettverschluss ausgebildet ist, der verriegelt wird, indem das Zubereitungsmodul durch den Benutzer im Aufnahmebereich um einen vorbestimmten Winkel rotiert wird.

Ferner sind Küchengerätebasen mit automatischen Verriegelungsmitteln bekannt. Die Verriegelungsmittel weisen beispielsweise verlagerbare Verriegelungsarme auf, die an der Küchengerätebasis etwa auf der Höhe eines Deckels eines Zubereitungsmoduls gehalten sind. Die Verriegelungsarme sind zwischen einer Verriegelungsposition und einer Freigabeposition rotierbar.

Obwohl die aus dem Stand der Technik bekannten Küchengeräte mit automatischer Verriegelung bereits eine große Benutzersicherheit und einen vorteilhaften Bedienkomfort gewährleisten, lassen sie sich aufgrund der küchengerätebasisfernen Anordnung der Verriegelungsmittel nur mit Zubereitungsmodulen mit einer einheitlichen Grundform betreiben.

Der Erfindung liegt daher die Aufgabe zugrunde, eine Küchengerätebasis, ein Zubereitungsmodul und ein Küchengerät anzugeben, mit denen eine automatische Verriegelung von unterschiedlichen Zubereitungsmodulen auf einer Küchengerätebasis ermöglicht ist.

Die vorgenannte Aufgabe ist bei einer gattungsgemäßen Küchengerätebasis gelöst mit dem Merkmalsinhalt des Kennzeichnungsteils des Anspruchs 1, nämlich dadurch, dass das Verriegelungsmittel mindestens eine Antriebseinheit und mindestens ein bewegbar gehaltenes Verriegelungselement aufweist. Das Verriegelungselement ist zumindest mittelbar durch die Antriebseinheit zumindest zwischen mindestens einer Freigabeposition und mindestens einer Verriegelungsposition bewegbar, so dass das Zubereitungsmodul mit der Küchengerätebasis verriegelbar und die Verriegelung lösbar ist.

In der Freigabeposition des Verriegelungselements ist ein Zubereitungsmodul in mindestens zwei unterschiedlichen Ausrichtungen in dem Aufnahmebereich anordenbar. "Zwei unterschiedliche Ausrichtungen" bedeutet in diesem Zusammenhang, dass das Zubereitungsmodul in mindestens zwei unterschiedlichen, insbesondere zueinander gedrehten Ausrichtungen, in dem einen Aufnahmebereich anordenbar ist. Ein Bedienmittel des Zubereitungsmoduls ist in einer ersten Ausrichtung beispielsweise nach rechts orientiert, in einer zweiten Ausrichtung beispielsweise nach links orientiert.

In der Verriegelungsposition wird eine Verriegelung des Zubereitungsmoduls mit der Küchengerätebasis bewirkt. Beim Bewegen des Verriegelungselements in Richtung der Verriegelungsposition werden die Küchengerätebasis und ein in dem Aufnahmebereich angeordnetes Zubereitungsmodul, vorzugsweise formschlüssig, bevorzugt im Aufnahmebereich, miteinander verbunden, so dass das Zubereitungsmodul nicht mehr aus dem Aufnahmebereich entnehmbar ist. Insbesondere wird das Zubereitungsmodul zumindest axial verriegelt, so dass über das Verriegelungselement Kräfte mit zumindest einem Anteil in einer Richtung parallel zu einer zentralen Achse A übertragbar sind.

Der Aufnahmebereich der Küchengerätebasis ist zum Verbinden mit dem Zubereitungsmodul eingerichtet und ausgebildet. Vorzugsweise wird das Zubereitungsmodul zumindest teilweise im Aufnahmebereich aufgenommen. Der Aufnahmebereich für das Zubereitungsgefäß ist vorzugsweise zumindest teilweise bezüglich seiner Form im Wesentlichen korrespondierend zu einem Fußabschnitt des Zubereitungsmoduls ausgebildet, insbesondere um das Zubereitungsmodul zumindest teilweise formschlüssig aufzunehmen. Der Aufnahmebereich ist insbesondere derart ausgebildet, dass eine Rotation des Zubereitungsmoduls relativ zur Küchengerätebasis bereits durch die mindestens zwei definierten Ausrichtungen verhindert wird. Bei den beiden Ausrichtungen relativ zur Küchengerätebasis wird ein Formschluss, der einen Rotation verhindert, bereits beim Anordnen des Zubereitungsmoduls im Aufnahmebereich verhindert.

Die Antriebseinheit weist vorzugsweise mindestens ein Antriebsmittel, insbesondere mindestens einen rotierenden Elektromotor und oder mindestens einen Linearmotor, auf. Ferner weist die Antriebseinheit mindestens ein mit dem Antriebsmittel verbundenes Übertragungsmittel, insbesondere mindestens ein Zahnrad, beispielsweise ein Schnecken-, Stirn- und/oder Kegelrad, und/oder einen Antriebsriemen und/oder eine Antriebskette auf. Vorzugsweise ist das Antriebsmittel mit mindestens einem Getriebe verbunden. Das Getriebe weist insbesondere eine Mehrzahl von Zahnrädern auf. Die Antriebseinheit ist insbesondere unmittelbar oder mittelbar mit dem bewegbar gelagerten Verriegelungselement verbunden, so dass das Verriegelungselement durch die Antriebseinheit zumindest zwischen mindestens einer Freigabeposition und mindestens einer Verriegelungsposition bewegbar ist.

Ferner ist vorgesehen, dass die Antriebseinheit mindestens eine Kupplungseinrichtung aufweist, beispielsweise mindestens eine Rutschkupplung. Vorzugsweise ist die Kupplungseinrichtung derart ausgebildet und in der Antriebseinheit angeordnet, dass sie bei Überschreiben mindestens eines Schwellenwerts für eine Kraft bei einer Bewegung und/oder eines Drehmoments auslöst, um eine Beschädigung der Antriebseinheit und/oder anderer Bauteile der Küchengerätebasis und/oder des Zubereitungsmoduls zu verhindern.

Das Verriegelungselement ist derart ausgebildet und eingerichtet, dass ein Zubereitungsmodul in der Freigabeposition in mindestens zwei, bevorzugt genau zwei, unterschiedlichen Ausrichtungen, vorzugsweise in zwei um mindestens 90°, insbesondere um 180°, zueinander versetzten Ausrichtungen, in dem Aufnahmebereich anordenbar ist. Das Verriegelungsmittel ist dabei derart ausgebildet, dass eine Verriegelung in jeder der Anordnungen erfolgen kann. Beispielsweise ist das Zubereitungsmodul in mindestens zwei, insbesondere genau zwei, mindestens drei, insbesondere genau drei, oder mindestens vier, insbesondere genau vier, Ausrichtungen in den Aufnahmebereich anorden- und verriegelbar.

Während oder nach dem Anordnen des Zubereitungsmoduls in dem Aufnahmebereich wird das Verriegelungselement in Richtung der Verriegelungsposition bewegt, so dass spätestens bei Erreichen der Verriegelungsposition eine Verriegelung, insbesondere eine axiale Verriegelung, des Zubereitungsmoduls mit der Küchengerätebasis bewirkt ist. Das Zubereitungsmodul wird im Aufnahmebereich mit der Küchengerätebasis verriegelt.

Beispielsweise führt die Bewegung des Verriegelungselementes dazu, dass mindestens ein Verriegelungsabschnitt des Verriegelungselementes formschlüssig mit mindestens einem Verriegelungsgegenabschnitt des Zubereitungsmoduls zusammenwirkt. Das Zubereitungsmodul ist folglich durch Verlagerung des Verriegelungselementes mit der Küchengerätebasis verriegelbar. Vorzugsweise sind mindestens zwei, insbesondere genau zwei, mindestens drei, insbesondere genau drei, oder mindestens vier, insbesondere genau vier, Verriegelungsabschnitte und/oder Verriegelungsgegenabschnitte vorgesehen. Die Verriegelungsabschnitte und Verriegelungsgegenabschnitte sind derart angeordnet, dass ein Zubereitungsmodul in der Freigabeposition des Verriegelungselements in mindestens zwei, bevorzugt genau zwei, unterschiedlichen Ausrichtungen, vorzugsweise in zwei um mindestens 90°, insbesondere um 180°, zueinander versetzten Ausrichtungen, in dem Aufnahmebereich anordenbar ist. Ferner ist vorzugsweise vorgesehen, dass die Verriegelungsabschnitte und Verriegelungsgegenabschnitte derart angeordnet sind, dass das Zubereitungsmodul in mindestens drei, insbesondere genau drei, oder mindestens vier, insbesondere genau vier, Ausrichtungen in dem Aufnahmebereich anorden- und verriegelbar ist.

Die Küchengerätebasis weist vorzugsweise mindestens ein Gehäuse auf, an dem der Aufnahmebereich zur Aufnahme mindestens eines Zubereitungsmoduls ausgebildet ist. Vorzugsweise ist der Aufnahmebereich im Wesentlichen in einer Ebene E angeordnet, die im Wesentlichen parallel zu einer Standfläche der Küchengerätebasis bei üblicher Verwendung ausgebildet ist. Vorzugsweise verfügt die Küchengerätebasis insbesondere über mindestens eine Arbeitseinheit mit mindestens einem Elektromotor, dessen Drehmoment über eine Antriebsschnittstelle im Aufnahmebereich übertragbar ist. Die Übertragung eines Drehmoments erfolgt beispielsweise über eine korrespondierende Antriebsschnittstelle eines Zubereitungsmoduls auf eine Welle bzw. auf ein in dem Zubereitungsmodul angeordnetes Werkzeug, beispielsweise eine Rühr- und/oder Zerkleinerungseinrichtung. Alternativ oder zusätzlich verfügt die Küchengerätebasis über mindestens eine Wiegeeinrichtung zum Wiegen von in dem Zubereitungsmodul angeordneten Speisen sowie ferner über mindestens einen Netzanschluss zur Spannungsversorgung.

Die Küchengerätebasis verfügt zudem beispielsweise über mindestens eine elektrische Schnittstelle. Insbesondere ist die elektrische Schnittstelle zur elektrischen Kontaktierung eines in dem Aufnahmebereich anordenbaren Zubereitungsmoduls ausgebildet. Vorzugsweise ist die elektrische Schnittstelle im Aufnahmebereich angeordnet. Die elektrische Schnittstelle kontaktiert im in den Aufnahmebereich eingebrachten Zustand insbesondere eine elektrische Gegenschnittstelle am Zubereitungsmodul.

Die Küchengerätebasis weist zudem insbesondere eine Steuereinrichtung auf. Die Antriebseinheit wird vorzugsweise von der Steuereinrichtung der Küchengerätebasis gesteuert, insbesondere veranlasst die Steuereinrichtung eine Bewegung in Richtung der Freigabeposition bzw. der Verriegelungsposition. Die Steuereinrichtung umfasst vorzugsweise eine Leistungselektronik, um mindestens eine an der elektrischen Schnittstelle kontaktierte Heizeinrichtung, beispielsweise eines Zubereitungsmoduls, zu betreiben.

Die Erfindung weist gegenüber dem Stand der Technik den Vorteil auf, dass unterschiedliche Zubereitungsmodule automatisch mit der Küchengerätebasis verriegelbar sind. Ferner sind die Zubereitungsmodule in unterschiedlichen Ausrichtungen auf die Küchengerätebasis aufsetzbar, so dass beispielsweise unterschiedlichen Anforderungen für Links- und Rechtshänder Rechnung getragen werden kann.

Als besonders vorteilhaft hat sich gemäß einer ersten Ausgestaltung der Küchengerätebasis herausgestellt, wenn vorgesehen ist, dass das Verriegelungselement mittels der Antriebseinheit rotierbar ist. Die Antriebseinheit greift dabei mittelbar oder unmittelbar an das Verriegelungselement an. Vorteilhaft ist vorgesehen, dass die Antriebseinheit mit einer Zahnleiste eines Antriebshebels zusammenwirkt, wobei der Antriebshebel formschlüssig, insbesondere durch zwei Stifte, mit dem Verriegelungselement verbunden ist. Die Stifte sind insbesondere einstückig mit dem Verriegelungselement ausgebildet und sind in korrespondierenden Ausnehmungen im Antriebshebel angeordnet. Eine Bewegung des Antriebshebels durch die Antriebseinheit bewirkt folglich unmittelbar eine Bewegung, insbesondere Rotation, des Verriegelungselementes.

Die Antriebseinheit ist vorzugsweise derart angeordnet, dass das Verriegelungselement und/oder der Antriebshebel von außerhalb der jeweiligen Drehachse angetrieben werden. Vorzugsweise sind das Verriegelungselement und/oder der Antriebshebel um eine Achse rotierbar, die auch der Rotationsachse einer Arbeitseinheit, insbesondere eines Motors, zum Antrieb eines Werkzeugs, vorzugsweise innerhalb eines Zubereitungsmoduls, entspricht. Vorzugsweise ist eine Welle zur Übertragung eines Drehmoments auf ein Werkzeug zentral in der Küchengerätebasis angeordnet, so dass sie von dem Verriegelungselement und/oder dem Antriebshebel umgeben ist. Insbesondere weisen der Antriebshebel und/oder das Verriegelungselement eine zentrale Ausnehmung auf. Der Antriebshebel ist beispielsweise ringförmig, scheibenförmig oder als Kreissegment ausgebildet. Es ist insbesondere auch vorgesehen, dass anstelle des Antriebshebels eine Mehrzahl von Stirnradstufen angeordnet sind, die ein Zusammenwirken mit dem Verriegelungselement bewirken.

Zum Ausbilden der formschlüssigen Verbindung zwischen Antriebshebel und Verriegelungselement ist gemäß einer weiteren Ausgestaltung vorgesehen, dass das Verriegelungselement, insbesondere die zwei Stifte, eine Basisplatte, die insbesondere an der Oberseite der Küchengerätebasis angeordnet ist, zumindest teilweise durchtritt.

Vorzugsweise ist das Verriegelungselement als Verriegelungsring ausgebildet, der an einer Oberseite der Küchengerätebasis im Aufnahmebereich angeordnet ist. Vorzugsweise ist der Verriegelungsring zwischen einer Oberfläche der Küchengerätebasis und einem auf der Oberfläche der Küchengerätebasis angeordneten Kontaktträgermodul angeordnet. Das Kontaktträgermodul ist relativ zur Oberfläche der Küchengerätebasis vorzugsweise orts- und rotationsfest gehalten. Der Verriegelungsring bewegt sich folglich relativ zur Oberseite der Küchengerätebasis und zum Kontaktträgermodul.

Insbesondere ist zumindest der Abschnitt des Verriegelungselementes, der zwischen Kontaktträgermodul und Oberfläche der Küchengerätebasis hervortritt, ringförmig ausgebildet.

Insbesondere um den Bauraum für das Verriegelungsmittel zu verringern, hat sich gemäß einer weiteren Ausgestaltung als vorteilhaft herausgestellt, wenn vorgesehen ist, dass das Verriegelungselement in einer Verriegelungsebene bewegbar ist. Vorzugsweise ist die Verriegelungsebene im Wesentlichen parallel zu einer Standfläche der Küchengerätebasis oder einer Oberfläche der Küchengerätebasis ausgerichtet. Die Standfläche ist die Standfläche, auf der die Küchengerätebasis zur üblichen Verwendung aufgestellt wird. Die Oberfläche der Küchengerätebasis ist die Oberfläche des Gehäuses, an der der Aufnahmebereich angeordnet ist, und auf die das Zubereitungsmodul platziert wird. Das Verriegelungselement ist im in dem Aufnahmebereich angeordneten Zustand eines Zubereitungsmoduls bevorzugt im Wesentlichen zwischen Oberseite der Küchengerätebasis und dem Zubereitungsmodul angeordnet.

Das Verriegelungselement wirkt zum Verriegeln beispielsweise unmittelbar mit dem Zubereitungsmodul zusammen oder das Verriegelungselement bewirkt mittelbar ein Verriegeln des Zubereitungsmoduls mit der Küchengerätebasis. Insbesondere bei Ausführungsbeispielen, bei denen das Verriegelungselement unmittelbar mit dem Zubereitungsmodul verriegelnd zusammenwirkt, hat sich als besonders vorteilhaft herausgestellt, wenn vorgesehen ist, dass das Verriegelungselement mindestens einen Verriegelungsabschnitt aufweist, und dass der Verriegelungsabschnitt in der Verriegelungsposition bei dem in dem Aufnahmebereich angeordneten Zubereitungsmodul mit mindestens einem Verriegelungsgegenabschnitt des Zubereitungsmoduls formschlüssig verriegelnd zusammenwirkt. In der Freigabeposition sind der Verriegelungsabschnitt und der Verriegelungsgegenabschnitt derart angeordnet, dass das Zubereitungsmodul aus dem Aufnahmebereich, insbesondere im Wesentlichen in Richtung einer zentralen Achse A, entnommen werden kann.

Vorteilhaft ist vorgesehen, dass das Verriegelungselement mindestens zwei Verriegelungsabschnitte aufweist, die jeweils formschlüssig mit einem zugehörigen Verriegelungsgegenabschnitt des Zubereitungsmoduls zusammenwirken. Insbesondere ist vorgesehen, dass die mindestens zwei Verriegelungsabschnitte auf einem Umfang des Verriegelungselementes im Wesentlichen gegenüberliegend zueinander angeordnet sind.

Beispielsweise weist der Verriegelungsabschnitt einen hakenförmigen oder stufenförmigen Querschnitt auf bzw. ist haken- oder stufenförmig ausgebildet, so dass zumindest ein Teil des Verriegelungsabschnitts in ein formschlüssiges Zusammenwirken mit einem Verriegelungsgegenabschnitt an einem Zubereitungsmodul bewegbar, insbesondere rotierbar, ist. Bei diesem Ausführungsbeispiel rotiert folglich das Verriegelungselement in die formschlüssige Verriegelung mit dem Zubereitungsmodul, insbesondere einem Fußbereich des Zubereitungsmoduls. Diese Ausgestaltung bietet den Vorteil, dass die für die Verriegelung erforderlichen Bauteile sehr flach aufgebaut werden können.

Gemäß einer weiteren alternativen Ausführungsform der erfindungsgemäßen Küchengerätebasis ist vorgesehen, dass das Verriegelungselement mindestens eine Mitnehmerkontur aufweist. Die Mitnehmerkontur ist zum Zusammenwirken mit einer Mitnehmergegenkontur an einem Verriegelungsgegenring am Zubereitungsmodul ausgebildet. Die Mitnehmerkontur am Verriegelungselement steht beispielsweise am Verriegelungselement hervor. Vorzugsweise sind mindestens zwei Mitnehmerkonturen am Verriegelungselement vorgesehen, die insbesondere gegenüberliegend zueinander auf einem Umfang angeordnet sind. Insbesondere sind mindestens drei, genau drei, mindestens vier oder genau vier Mitnehmerkonturen sowie zugehörige Mitnehmergegenkonturen vorgesehen. Die Mitnehmerkonturen und die Mitnehmergegenkonturen sind derart angeordnet, dass das Zubereitungsmodul in der Freigabeposition in mindestens zwei Ausrichtungen im Aufnahmebereich anordenbar ist.

Die Mitnehmerkontur ist derart ausgebildet, dass sie formschlüssig mit einer Mitnehmergegenkontur an einem Verriegelungsgegenelement, insbesondere Verriegelungsgegenring, am Zubereitungsmodul zusammenwirken kann. Insbesondere ist mittels der Mitnehmerkontur eine Rotation des Verriegelungselementes auf das Verriegelungsgegenelement am Zubereitungsmodul übertragbar. Beispielsweise ist die Mitnehmerkontur als Mitnehmerrippe und/oder die Mitnehmergegenkontur als korrespondierender Mitnehmerspalt ausgebildet. Das formschlüssige Zusammenfügen der Mitnehmerkontur und der Mitnehmergegenkontur erfolgt durch Anordnen des Zubereitungsmoduls im Aufnahmebereich.

Das Verriegelungsgegenelement ist rotierbar, insbesondere in einem Fußabschnitt des Zubereitungsmoduls, gelagert. An dem Verriegelungsgegenelement ist mindestens ein Verriegelungsabschnitt, insbesondere sind mindestens zwei Verriegelungsabschnitte, ausgebildet. Das Verriegelungsgegenelement ist von dem Verriegelungselement zwischen einer Freigabeposition und einer Verriegelungsposition bewegbar. Wenn sich das Verriegelungselement in der Verriegelungsposition befindet, befindet sich auch das Verriegelungsgegenelement in der Verriegelungsposition. Befindet sich das Verriegelungselement in der Freigabeposition, befindet sich auch das Verriegelungsgegenelement in der Freigabeposition.

In der Verriegelungsposition wirkt der Verriegelungsabschnitt bzw. wirken die Verriegelungsabschnitte des Verriegelungsgegenelements formschlüssig mit mindestens einer Verriegelungskontur an der Oberseite der Küchengerätebasis zusammen, wodurch das Zubereitungsmodul formschlüssig mit der Küchengerätebasis verbunden wird. Vorzugsweise sind auf der Oberseite der Küchengerätebasis mindestens zwei, insbesondere genau zwei, mindestens drei, insbesondere genau drei, mindestens vier, insbesondere genau vier, mindestens fünf, insbesondere genau fünf, oder mindestens sechs, insbesondere genau sechs, Verriegelungskonturen vorgesehen. Jede Verriegelungskontur erstreckt sich vorzugsweise von einer Oberseite der Küchengerätebasis, insbesondere im Wesentlichen senkrecht nach oben.

Die Verriegelungskontur ist bzw. die Verriegelungskonturen sind vorzugsweise hakenförmig ausgebildet, so dass ein jeweiliger Verriegelungsabschnitt des Verriegelungsgegenelements unter die hakenförmigen Verriegelungskonturen rotieren kann, um ein Zubereitungsmodul mit der Küchengerätebasis zu verriegeln. Vorzugsweise sind die Verriegelungskonturen derart ausgebildet und eingerichtet, dass sie den Aufnahmebereich der Küchengerätebasis definieren.

Beispielsweise weisen die Verriegelungskonturen Einführschrägen auf, um das Zubereitungsmodul im Aufnahmebereich zu positionieren. Vorzugsweise weist zumindest der Verriegelungsgegenring eine der Anzahl der Verriegelungskonturen entsprechende Anzahl an Ausnehmungen auf, insbesondere in einem umlaufenden Verriegelungsabschnitt, um ein Anordnen des Zubereitungsmoduls auf der Küchengerätebasis zu ermöglichen.

Zur elektrischen Kontaktierung des Zubereitungsmoduls an der Küchengerätebasis hat sich als besonders vorteilhaft herausgestellt, wenn eine elektrische Schnittstelle an der Küchengerätebasis, insbesondere im Aufnahmebereich, angeordnet ist, und wenn die elektrische Schnittstelle mindestens zwei Leistungskontakte und mindestens einen Hilfskontakt aufweist. Die elektrische Schnittstelle dient zur Kontaktierung mit einer elektrischen Gegenschnittstelle an dem Zubereitungsmodul. Um die Kontaktkräfte beim Einbringen des Zubereitungsmoduls in den Aufnahmebereich der Küchengerätebasis vorteilhaft zu verringern, ist vorgesehen, dass mindestens einer der Leistungskontakte und/oder zumindest der Hilfskontakt der elektrischen Schnittstelle, vorzugsweise zumindest mittelbar mittels der Antriebseinheit, aus einer Ruheposition zumindest in Richtung einer Kontaktposition an der Küchengerätebasis bewegbar ist. Die elektrische Schnittstelle weist vorzugsweise mindestens zwei, mindestens drei oder mindestens vier Leistungskontakte auf. Beispielsweise sind mindestens zwei, mindestens drei oder mindestens vier Leistungskontakte und/oder mindestens ein, mindestens zwei, mindestens drei, mindestens vier, mindestens fünf, mindestens sechs, mindestens sieben oder mindestens acht Hilfskontakte vorgesehen. Beispielsweise sind die Hilfskontakte derart symmetrisch an der Küchengerätebasis angeordnet, dass ein Zubereitungsmodul in mindestens zwei unterschiedlichen Ausrichtungen anordenbar ist.

Sofern nur ein einziger Hilfskontakt vorgesehen ist, ist dieser insbesondere derart ausgebildet und angeordnet, dass er in zwei unterschiedlichen Anordnungen eines Zubereitungsmoduls kontaktierbar ist. Beispielsweise erstreckt sich der Hilfskontakt dazu zumindest über einen Teil einer Umfangsfläche, insbesondere eines Kontaktträgermoduls, im Aufnahmebereich.

Die Hilfskontakte sind beispielsweise für Mess-, Steuer- und/oder Regelzwecke ausgebildet. Vorzugsweise ist mindestens ein Hilfskontakt als Schutzleiter ausgebildet und/oder sind mindestens zwei Hilfskontakte als Signalkontakte, insbesondere für mindestens einen Temperatursensor, vorzugsweise ein Thermoelement, des Zubereitungsmoduls ausgebildet und/oder ist mindestens ein Hilfskontakt als Deckelkontakt ausgebildet und/oder ist mindestens ein Hilfskontakt zur Übertragung von Daten und/oder Signalen zum Zubereitungsmodul ausgebildet und/oder ist mindestens ein Hilfskontakt zur Spannungsversorgung von Bauelementen in einem Zubereitungsmodul mit für eine Berührung unkritischen Spannungen ausgebildet.

Insbesondere ist vorgesehen, dass die Bewegung des Leistungskontakts bzw. der Leistungskontakte und/oder des Hilfskontakts derart gesteuert ist, dass sich die Leistungskontakte bzw. der Hilfskontakt in einer Kontaktposition befinden, wenn sich das Verriegelungselement in einer Verriegelungsposition befindet. Gleichermaßen sind die Leistungskontakte und/oder der Hilfskontakt in einer Ruheposition, wenn sich das Verriegelungselement in einer Freigabeposition befindet.

Vorzugsweise erfolgt das Bewegen der Leistungskontakte bzw. des Hilfskontakts aus der Ruheposition zumindest in Richtung der Kontaktposition während und/oder nach dem Einbringen des Zubereitungsmoduls in den Aufnahmebereich. Es ist folglich sowohl vorgesehen, dass eine Bewegung der Leistungskontakte und/oder des Hilfskontakts bereits beginnt, während ein Zubereitungsmodul im Aufnahmebereich angeordnet wird und nach dem Einbringen abgeschlossen ist. Es ist auch vorgesehen, dass die Bewegung der Leistungskontakte und/oder des Hilfskontakts erst beginnt, nachdem das Zubereitungsmodul im Aufnahmebereich angeordnet ist.

Beispielsweise ist vorgesehen, dass das Bewegen des Leistungskontakts bzw. der Leistungskontakte und/oder des Hilfskontakts aus der Ruheposition in Richtung der Kontaktposition zeitgleich mit der Bewegung des Verriegelungselementes des Verriegelungsmittels erfolgt. Eine Verriegelung sowie eine elektrische Kontaktierung erfolgen vorzugsweise zumindest teilweise oder vollständig gleichzeitig, insbesondere unter Wirkung der Antriebseinheit. Ferner ist vorgesehen, dass die elektrische Kontaktierung zu einem anderen Zeitpunkt als die mechanische Verriegelung des Zubereitungsmoduls mit der Küchengerätebasis erfolgt, beispielsweise vor der mechanischen Verriegelung oder nach der mechanischen Verriegelung. Es ist auch vorgesehen, dass die elektrische Kontaktierung zumindest teilweise gleichzeitig und zumindest teilweise vor oder nach der Verriegelung erfolgt. Beispielsweise werden die Hilfskontakte vor der mechanischen Verriegelung kontaktiert und die Leistungskontakte zumindest teilweise gleichzeitig, vollständig gleichzeitig mit der mechanischen Verriegelung, oder die Leistungskontakte werden nach der mechanischen Verriegelung kontaktiert.

Es ist insbesondere vorgesehen, dass das Verriegelungselement zumindest teilweise gleichzeitig, insbesondere vollständig gleichzeitig, mit dem mindestens einen Leistungskontakt und/oder zumindest mit dem Hilfskontakt bewegt wird, um ein Zubereitungsmodul zu verriegeln. Alternativ dazu ist auch vorgesehen, dass das Verriegelungselement zeitlich vor oder nach dem mindestens einen Leistungskontakt und/oder zumindest dem Hilfskontakt bewegt wird, um ein Zubereitungsmodul zu verriegeln.

Die Antriebseinheit ist beispielsweise mechanisch sowohl mit dem Verriegelungselement des Verriegelungsmittels als auch mit den Leistungskontakten und/oder dem Hilfskontakt verbunden, so dass die Antriebseinheit alle Bewegungen automatisch bewirkt. Vorzugsweise ist vorgesehen, dass alle Leistungskontakte und/oder alle Hilfskontakte zwischen einer Ruheposition und einer Kontaktposition bewegbar sind. Es ist beispielsweise auch vorgesehen, dass Kontakt- und Ruheposition für die Leistungskontakte und die Hilfskontakte unterschiedlich sind.

Bei einem in dem Aufnahmebereich angeordneten Zubereitungsmodul sind die Leistungskontakte in der Kontaktposition mit Leistungsgegenkontakten des Zubereitungsmoduls kontaktiert. Alternativ oder zusätzlich ist in der Kontaktposition der Hilfskontakt bzw. sind die Hilfskontakte mit einem Hilfsgegenkontakt bzw. mit mehreren Hilfsgegenkontakten des Zubereitungsmoduls kontaktiert. "Elektrisch kontaktiert" meint dabei nicht das tatsächliche Beaufschlagen mit Spannung oder einem Strom, sondern lediglich die physikalische Kontaktierung, die prinzipiell ein Leiten von Strom oder Signalen ermöglicht.

Beispielsweise ist vorgesehen, dass die beiden Leistungskontakte bewegbar sind und mit als Kontaktmesser ausgebildeten Leistungsgegenkontakten kontaktierbar sind bzw. kontaktiert sind. Vorzugsweise sind der Hilfskontakt und der Hilfsgegenkontakt bzw. die Hilfskontakte und die Hilfsgegenkontakte jeweils ortsfest, insbesondere als federnde Kontaktklammern, ausgebildet. Insbesondere ist vorgesehen, dass die Leistungskontakte als erster Schnittstellentyp und der Hilfskontakt bzw. die Hilfskontakte als zweiter Schnittstellentyp ausgebildet sind. Erster und zweiter Schnittstellentyp sind unterschiedlich ausgebildet.

Die Bewegung des Leistungskontakts bzw. der Leistungskontakte und/oder des Hilfskontakts bzw. der Hilfskontakte erfolgt rotativ, translatorisch oder als eine Kombination daraus. Die Bewegung erfolgt beispielsweise radial, also in einer Ebene, die beispielsweise parallel zu einer Standfläche der Küchengerätebasis ist, oder axial, also in eine Richtung, die orthogonal zu einer Standfläche der Küchengerätebasis ausgerichtet ist. Es ist auch vorgesehen, dass die Bewegung in einer Richtung erfolgt, die geneigt zur Standfläche der Küchengerätebasis ist.

Alternativ oder zusätzlich ist vorgesehen, dass mindestens einer der Leistungsgegenkontakte, vorzugsweise beide Leistungsgegenkontakte, und/oder mindestens der Hilfsgegenkontakte bzw. die Hilfsgegenkontakte der Gegenschnittstelle des Zubereitungsmoduls aus einer Ruheposition zumindest in Richtung einer Kontaktposition an dem Zubereitungsmodul bewegbar sind. Der Leistungsgegenkontakt bzw. die Leistungsgegenkontakte oder der Hilfsgegenkontakt sind folglich bewegbar am Zubereitungsmodul gehalten und werden während und/oder nach dem Anordnen des Zubereitungsmoduls, wie auch die Kontakte der elektrischen Schnittstelle, aus einer Ruheposition zumindest in Richtung einer Kontaktposition, vorzugsweise zwischen einer Ruheposition und einer Kontaktposition, bewegt.

Dieses Ausführungsbeispiel weist gegenüber dem Stand der Technik den Vorteil auf, dass das Anordnen des Zubereitungsmoduls in dem Aufnahmebereich vereinfacht wird. Die Kontaktkräfte für den Benutzer werden reduziert, da eine Kontaktierung mindestens eines Kontakts der elektrischen Schnittstelle, vorzugsweise aller Kontakte, erst nach Anordnen des Zubereitungsmoduls in dem Aufnahmebereich erfolgt.

Gemäß einer weiteren Ausgestaltung der erfindungsgemäßen Küchengerätebasis ist vorteilhaft vorgesehen, dass mindestens einer der Leistungskontakte, zumindest der Hilfskontakt, mindestens einer der Leistungsgegenkontakte und/oder zumindest der Hilfsgegenkontakt zumindest mittelbar mittels der Antriebseinheit bewegbar sind/ist. Die Antriebseinheit ist beispielsweise - wie vorstehend beschrieben - in der Küchengerätebasis angeordnet und dient auch der Verriegelung und/oder es ist zusätzlich eine weitere Antriebseinheit in dem Zubereitungsmodul angeordnet und/oder eine Bewegung der Antriebseinheit der Küchengerätebasis wird im in den Aufnahmebereich eingebrachten Zustand auf die Leistungsgegenkontakte bzw. den Hilfsgegenkontakt übertragen.

Die Antriebseinheit ist zumindest mittelbar, insbesondere unmittelbar, mit den Leistungskontakten, dem Hilfskontakt, den Leistungsgegenkontakten und/oder dem Hilfsgegenkontakt mechanisch in Verbindung, so dass diese durch die Antriebseinheit bewegbar sind/ist.

Zum Bewegen des Leistungskontakts bzw. der Leistungskontakte und/oder des Hilfskontakts bzw. der Hilfskontakte stehen diese zumindest mittelbar, insbesondere unmittelbar, mit dem vorstehend beschriebenen Antriebshebel in Kontakt. Vorzugsweise sind die Leistungskontakte in Kontaktträgern gehalten, wobei jeder Kontaktträger mit einem Antriebsvorsprung in eine Kulissenausnehmung am Antriebshebel eingreift. Die Antriebsvorsprünge wirken derart mit der Kulissenausnehmung zusammen, dass eine Rotation des Antriebshebels eine translatorische Bewegung der Kontaktträger mit den Leistungskontakten bewirkt.

Die Erfindung betrifft ferner ein Zubereitungsmodul, insbesondere für eine Küchengerätebasis nach einem der vorbeschriebenen Ausführungsbeispiele. Das Zubereitungsmodul ist zum Anordnen in einem Aufnahmebereich einer vorbeschriebenen Küchengerätebasis ausgebildet. Das Zubereitungsmodul weist vorzugsweise, insbesondere in seinem Fußabschnitt, mindestens eine elektrische Gegenschnittstelle - wie vorstehend beschrieben - zur Kontaktierung mit einer elektrischen Schnittstelle der Küchengerätebasis auf. Das Zubereitungsmodul wird insbesondere in seinem Fußabschnitt, insbesondere von unten, mit der Küchengerätebasis, insbesondere mit dem Aufnahmebereich der Küchengerätebasis, verriegelt.

Das Zubereitungsmodul weist ein bewegbar, insbesondere rotierbar, gelagertes Verriegelungsgegenelement, auf. Das Verriegelungsgegenelement ist vorzugsweise als Verriegelungsgegenring ausgebildet. Das Verriegelungsgegenelement ist an einem Gehäuse des Zubereitungsmoduls gelagert. Das Verriegelungsgegenelement ist von dem Verriegelungselement der Küchengerätebasis - wie vorstehend beschrieben - im in dem Aufnahmebereich angeordneten Zustand zumindest zwischen einer Verriegelungsposition und einer Freigabeposition bewegbar.

Das Verriegelungsgegenelement ist derart ausgebildet, dass das Verriegelungselement der Küchengerätebasis an mindestens zwei Positionen des Verriegelungsgegenelementes, insbesondere auf einem Umfang des Verriegelungsgegenelementes, zum Bewegen, insbesondere zum Rotieren, formschlüssig eingreifen kann. Auf diese Weise ist gewährleistet, dass das Zubereitungsmodul in mindestens zwei verschiedenen Ausrichtungen auf die Küchengerätebasis aufgebracht bzw. in dem Aufnahmebereich angeordnet werden kann.

Das Verriegelungsgegenelement weist dazu mindestens zwei Mitnehmergegenkonturen auf, die mit mindestens einer Mitnehmerkontur am Verriegelungselement der Küchengerätebasis zusammenwirken können. Die Mitnehmerkonturen und/oder die Mitnehmergegenkonturen weisen zum einfacheren Zusammenfügen vorzugsweise Einführschrägen auf. Weist die Küchengerätebasis am Verriegelungselement nur eine einzige Mitnehmerkontur auf, kann diese je nach Ausrichtung des Zubereitungsmoduls in die eine oder andere Mitnehmergegenkontur des Verriegelungsgegenelements eingreifen. Sind an dem Verriegelungselement der Küchengerätebasis zwei Mitnehmerkonturen ausgebildet, können diese jeweils in beide Mitnehmergegenkonturen, wechselweise in Abhängigkeit von der Ausrichtung des Zubereitungsmoduls, eingreifen. Dies gilt für jede Anzahl an Mitnehmerkonturen und Mitnehmergegenkonturen.

Das Verriegelungselement bewirkt - während es sich selbst von seiner Freigabeposition in seine Verriegelungsposition bewegt - eine Bewegung des Verriegelungsgegenelements von einer Freigabeposition in eine Verriegelungsposition, wobei in der Verriegelungsposition - wie vorstehend beschrieben - ein Verriegelungsabschnitt des Verriegelungsgegenrings mit Verriegelungskonturen an einer Oberseite der Küchengerätebasis formschlüssig zusammenwirkt, wodurch das Zubereitungsmodul mit der Küchengerätebasis verriegelt ist.

Es ist ferner vorgesehen, dass das Verriegelungsgegenelement in Wirkverbindung mit mindestens einem Leistungsgegenkontakt, insbesondere allen Leistungsgegenkontakten, und/oder zumindest dem Hilfsgegenkontakt, insbesondere allen Hilfsgegenkontakten, steht, derart, dass eine Bewegung des Verriegelungsgegenelements in die Verriegelungsposition eine Bewegung mindestens eines Leistungsgegenkontakts und/oder zumindest des Hilfsgegenkontakts aus einer Ruheposition in eine Kontaktposition am Zubereitungsmodul bewegt.

Als besonders vorteilhaft hat sich gemäß einer weiteren Ausgestaltung herausgestellt, wenn vorgesehen ist, dass das Verriegelungselement mindestens eine umlaufende Nut aufweist, und dass das Verriegelungselement mittels der Nut rotierbar am Zubereitungsmodul, insbesondere in einem Fußabschnitt des Zubereitungsmoduls, gelagert ist. Vorzugsweise ist vorgesehen, dass ein umlaufender Steg am Zubereitungsmodul in die Nut am Verriegelungsgegenelement eingreift, so dass der Verriegelungsring rotierbar, aber verkippsicher und stabil, am Zubereitungsmodul gelagert ist. Durch das Eingreifen des Stegs in die umlaufende Nut können hohe Kräfte übertragen werden.

Gemäß einer weiteren Ausgestaltung des Zubereitungsmoduls ist vorgesehen, dass mindestens ein Zubereitungsraum vorhanden ist, und dass der Zubereitungsraum mit mindestens einem Deckel verschließbar ist. Das Zubereitungsmodul weist ferner mindestens eine Deckelverriegelungseinrichtung auf. Die Deckelverriegelungseinrichtung steht mit dem Verriegelungsgegenelement in Wirkverbindung, so dass mit der Deckelverriegelungseinrichtung zumindest in der Verriegelungsposition des Verriegelungsgegenelements eine Verriegelung mindestens eines an dem Zubereitungsmodul anordenbaren Deckels bewirkbar ist. Vorzugsweise sind das Verriegelungsgegenelement und die Deckelverriegelungseinrichtung derart gekoppelt, dass der Deckel verriegelt ist, wenn sich das Verriegelungsgegenelement in seiner Verriegelungsposition befindet, und der Deckel freigegeben ist, wenn sich das Verriegelungsgegenelement in seiner Freigabeposition befindet.

Ferner ist beispielsweise vorgesehen, dass das Verriegelungsgegenelement und die Deckelverriegelungseinrichtung derart gekoppelt sind oder angesteuert werden, dass in einem ersten Schritt das Zubereitungsmodul mit der Küchengerätebasis verriegelt wird und nachfolgend in einem zweiten Schritt, insbesondere zeitlich versetzt oder auf Basis einer Eingabe oder Aktion eines Benutzers, der Deckel mit dem Zubereitungsmodul verriegelt wird. Dadurch wird es einem Benutzer ermöglicht, bei mit der Küchengerätebasis verriegeltem Zubereitungsmodul den Deckel des Zubereitungsmoduls zu entfernen, beispielsweise um Speisen einzubringen.

Die Deckelverriegelungseinrichtung umfasst Mittel, um unter Wirkung der Rotation des Verriegelungsgegenelements eine Verriegelung des Deckels mit dem Zubereitungsmodul zu bewirken. Die Deckelverriegelungseinrichtung weist dazu beispielsweise eine rotierbare Stange oder ein Getriebe auf. Neben einer Verriegelung des Zubereitungsmoduls mit der Küchengerätebasis erfolgt also zeitgleich eine Verriegelung eines Deckels mit dem Zubereitungsmodul - sofern vorhanden.

Das Zubereitungsmodul verfügt vorzugsweise über mindestens eine elektrische Heizeinrichtung, insbesondere mindestens zwei elektrische Heizeinrichtungen. Jede elektrische Heizeinrichtung wird über die elektrische Gegenschnittstelle kontaktiert. Beispielsweise verfügt das Zubereitungsmodul über mindestens ein Werkzeug, beispielsweise ein Reibwerkzeug, ein Rührwerkzeug und/oder ein Zerkleinerungswerkzeug. Ferner ist vorgesehen, dass das Werkzeug beispielsweise als Obst- und/oder Gemüsepresse oder -reibe ausgebildet ist. Es ist vorgesehen, dass die Funktionen der vorgenannten Werkzeuge in einem Werkzeug kombiniert sind. Das Zubereitungsmodul weist insbesondere mindestens eine Antriebsschnittstelle auf, um Drehmomente von einer Arbeitseinheit, z. B. einem Motor, der Küchengerätebasis auf ein in dem Zubereitungsmodul angeordnetes Werkzeug zu übertragen.

Eine Steuereinrichtung des Küchengerätes, insbesondere der Küchengerätebasis, steuert beispielsweise zumindest teilautomatisch oder automatisch einen Heizvorgang des Zubereitungsmoduls oder einen Zubereitungsprozess einer Speise. Mit der Steuereinrichtung werden vorzugsweise auch Programmabläufe zur Zubereitung von Speisen, z. B. Rezepte, insbesondere teilautomatisch oder automatisch, gesteuert. Vorzugsweise ist die Küchengerätebasis oder das Küchengerät, für das automatische, teilautomatische oder manuelle Zubereiten, z. B. Zerkleinern, Mahlen, Pressen, Rühren, Garen und/oder Warmhalten, insbesondere von Speisen, ausgebildet.

Das Zubereitungsmodul weist vorzugsweise einen Zubereitungsinnenraum zur Aufnahme von Speisen auf. Das Zubereitungsmodul ist beispielsweise als Zubereitungstopf ausgebildet, insbesondere mit mindestens einer integrierten Heizeinrichtung und mindestens einer integrierten Rühreinrichtung. Mit der Heizeinrichtung sind Nahrungsmittel aufheizbar. Mit der Rühreinrichtung sind Nahrungsmittel rühr- und/oder zerkleinerbar.

Es ist auch vorgesehen, dass das Zubereitungsmodul als Heizmodul mindestens eine Heizfläche aufweist, die mit mindestens einer Heizeinrichtung aufheizbar ist, und auf der mindestens ein Gefäß, insbesondere ein Topf oder ein Wok oder eine Pfanne, platziert werden kann.

Die vorliegende Erfindung betrifft ferner ein Küchengerät, das mindestens eine Küchengerätebasis, insbesondere nach einem der vorstehend beschriebenen Ausführungsbeispiele, sowie mindestens ein Zubereitungsmodul, insbesondere nach einem der vorstehend beschriebenen Ausführungsbeispiele, aufweist. Das erfindungsgemäße Küchengerät ist insbesondere zur Zubereitung von Speisen eingerichtet und ausgebildet.

Vorzugweise ist das Küchengerät derart eingerichtet und ausgebildet, dass eine Kontaktierung durch Bewegung der Leistungskontakte und eine Verriegelung automatisch nach dem Einbringen des Zubereitungsmoduls in den Aufnahmebereich der Küchengerätebasis erfolgt.

Vorzugweise ist das Küchengerät derart eingerichtet und ausgebildet, dass eine Kontaktierung durch Bewegung der Leistungskontakte und eine Verriegelung automatisch nach dem Einbringen des Zubereitungsmoduls in den Aufnahmebereich der Küchengerätebasis erfolgt.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Küchengeräts mit Küchengerätebasis und Zubereitungsmodul,
- Fig. 2: ein Ausführungsbeispiel einer Küchengerätebasis mit einem Verriegelungsmittel erster Art und Leistungskontakten erster Art,
- Fig. 3: ein Ausführungsbeispiel einer Küchengerätebasis mit einem Verriegelungsmittel zweiter Art und Leistungskontakten erster Art,
- Fig. 4: ein Ausführungsbeispiel einer Küchengerätebasis mit einem Verriegelungsmittel zweiter Art und Leistungskontakten zweiter Art in einem ersten Zustand,
- Fig. 5: das Ausführungsbeispiel einer Küchengerätebasis gemäß Fig. 4 in einem zweiten Zustand,
- Fig. 6: eine Teilansicht eines Ausführungsbeispiels einer Küchengerätebasis,
- Fig. 7: ein Ausführungsbeispiel eines Verriegelungselementes,
- Fig. 8: Draufsicht auf ein Ausführungsbeispiel einer Küchengerätebasis in einem ersten Zustand,
- Fig. 9: Draufsicht auf eine Küchengerätebasis gemäß Fig. 8 in einem zweiten Zustand,
- Fig. 10: ein Ausführungsbeispiel einer Küchengerätebasis mit Zubereitungsmodul in Schnittansicht,
- Fig. 11: ein Ausführungsbeispiel eines Zubereitungsmoduls von der Unterseite,
- Fig. 12: ein Ausführungsbeispiel eines Fußabschnitts eines Zubereitungsmoduls,
- Fig. 13: ein weiteres Ausführungsbeispiel eines Fußabschnitts eines Zubereitungsmoduls,
- Fig. 14: ein Ausführungsbeispiel eines Verriegelungsgegenelementes für ein Zubereitungsmodul,
- Fig. 15: ein Ausführungsbeispiel eines Fußbereiches eines Zubereitungsmoduls,
- Fig. 16: ein Ausführungsbeispiel eines Verriegelungselementes mit Antriebshebel und Antriebseinheit, und
- Fig. 17: ein Ausführungsbeispiel eines Zubereitungsmoduls in teilweise montiertem Zustand.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

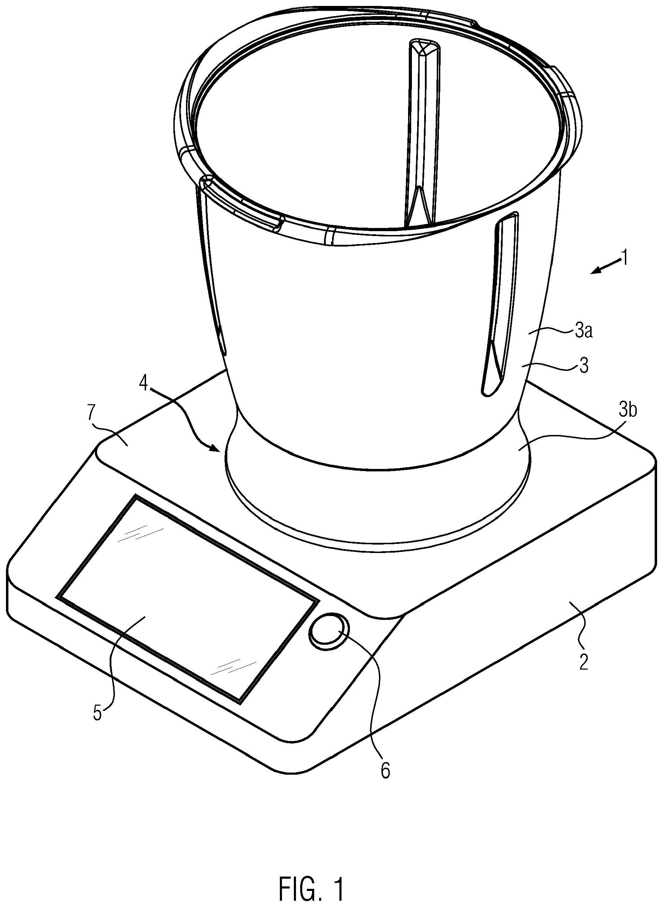

Fig. 1 zeigt ein Ausführungsbeispiel eines Küchengeräts 1, aufweisend eine Küchengerätebasis 2 und ein Zubereitungsmodul 3. Gemäß Fig. 1 ist das Zubereitungsmodul 3 in einem Aufnahmebereich 4 der Küchengerätebasis 2 angeordnet. Die Küchengerätebasis 2 verfügt über eine Bedien- und Anzeigeeinrichtung 5. Zusätzlich kann mindestens ein Bedienmittel 6, das hier als Drück- und Drehknopf ausgebildet ist, vorhanden sein. Mit der Bedien- und Anzeigeeinrichtung 5 und dem Bedienmittel 6 lassen sich Funktionen steuern und Programme, insbesondere Zubereitungsprogramme, starten. Eine Oberseite 7 der Küchengerätebasis 2 ist im Wesentlichen eben und parallel zu einer Standfläche der Küchengerätebasis 2 bei der üblichen Verwendung ausgebildet.

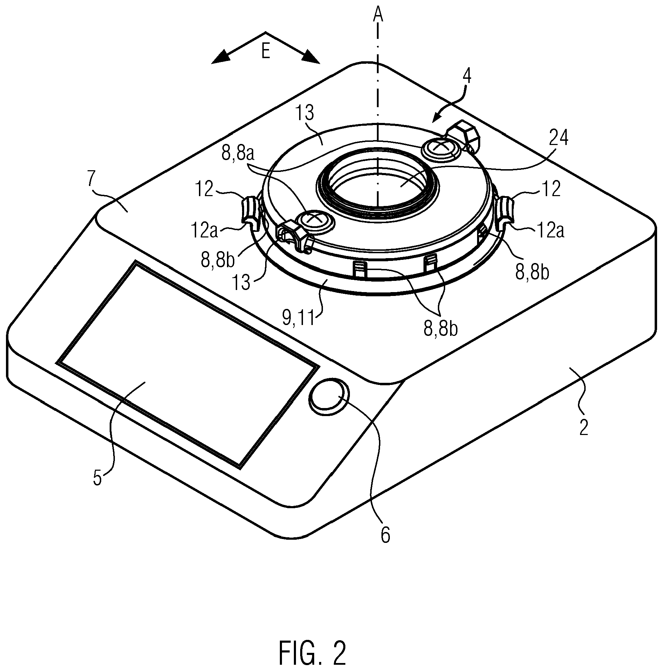

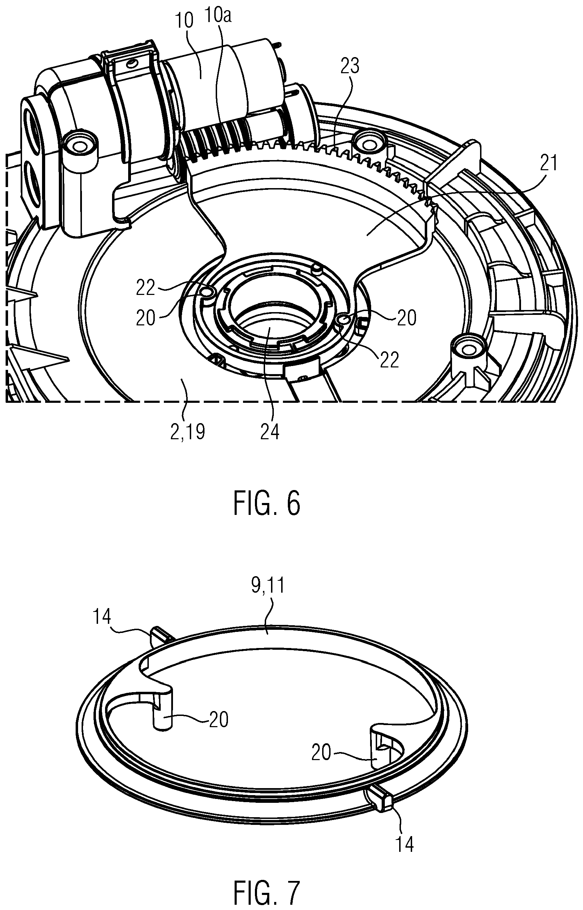

Fig. 2 zeigt ein Ausführungsbeispiel einer Küchengerätebasis 2 ohne aufgesetztes Zubereitungsmodul 3 in perspektivischer Ansicht. Im Aufnahmebereich 4 an der Oberseite 7 der Küchengerätebasis 2 ist eine elektrische Schnittstelle 8 vorgesehen, die zwei Leistungskontakte 8a und insgesamt acht Hilfskontakte 8b aufweist. Zudem ist im Aufnahmebereich 4 ein Verriegelungsmittel 9 zum mechanischen Verriegeln eines - in Fig. 1 dargestellten - Zubereitungsmoduls 3 ausgebildet. Das Verriegelungsmittel 9 weist mindestens eine - beispielhaft in den Fig. 6, 10 und 15 dargestellte - Antriebseinheit 10 auf sowie ein bewegbar gehaltenes Verriegelungselement 11. Das Verriegelungselement 11 ist bei diesem Ausführungsbeispiel gemäß Fig. 1 als Verriegelungsring ausgebildet.

Das Verriegelungselement 11 ist rotierbar, insbesondere um eine zentrale Achse A, an der Küchengerätebasis 2 gehalten. Das Verriegelungselement 11 ist unterhalb der Hilfskontakte 8b bewegbar. Die Antriebseinheit 10 ist außerhalb der Antriebsachse A angeordnet. Das Verriegelungselement 11 ist einer Verriegelungsebene E gehalten, die im Wesentlichen parallel zur Oberseite 7 der Küchengerätebasis 2 ausgebildet ist. Das Verriegelungselement 11 ist durch die Antriebseinheit 10 zwischen mindestens einer Verriegelungsposition und einer Freigabeposition bewegbar.

In der Freigabeposition kann ein Zubereitungsmodul 3 in mindestens zwei unterschiedlichen Ausrichtungen in dem Aufnahmebereich 4 angeordnet werden. In der Verriegelungsposition wird eine Verriegelung des Zubereitungsmoduls 3 mit der Küchengerätebasis 4 bewirkt. Dazu sind an dem Verriegelungselement 11 zwei gegenüberliegend angeordnete Verriegelungsabschnitte 12 vorgesehen. Die Verriegelungsabschnitte 12 weisen einen im Wesentlichen stufenförmigen Querschnitt auf. Bei einer Rotation des Verriegelungselementes 11 werden diese stufenförmigen Verriegelungsabschnitte 12 in formschlüssigem Eingriff mit einem am Zubereitungsmodul 3 ausgebildeten Verriegelungsgegenabschnitt gebracht, so dass das Zubereitungsmodul 3 mit der Küchengerätebasis 2 formschlüssig verriegelt ist und nicht mehr aus dem Aufnahmebereich 4 entnehmbar ist. In der Verriegelungsposition kann eine Inbetriebnahme der Küchengerätebasis 2 zusammen mit dem Zubereitungsmodul 3, nämlich des Küchengeräts 1, erfolgen.

Beim Anordnen eines Zubereitungsmoduls 3 im Aufnahmebereich 4 werden bei dem Ausführungsbeispiel der Fig. 1 sowohl die Leistungskontakte 8a als auch die Hilfskontakte 8b mit zugehörigen Leistungsgegenkontakten - nicht dargestellt - sowie zugehörigen Hilfsgegenkontakten - nicht dargestellt - des Zubereitungsmoduls 3 kontaktiert, so dass das Zubereitungsmodul 3 elektrisch kontaktiert ist. Die Leistungskontakte 8a dienen beispielsweise dem Betrieb einer in dem Zubereitungsmodul 3 angeordneten Heizeinrichtung. Die Hilfskontakte 8b dienen beispielsweise der Kontaktierung eines Schutzleiters und/oder zwei Hilfskontakte 8b dienen der Übertragung von Signalen für mindestens einen im Zubereitungsmodul 3 angeordneten Temperatursensor, insbesondere mindestens eines Thermoelementes, und/oder mindestens ein Hilfskontakt 8b dient der Kontaktierung eines Deckelkontaktes des Zubereitungsmoduls 3. Die Leistungskontakte 8a sowie die Hilfskontakte 8b sind an einem Kontaktträgermodul 13 angeordnet.

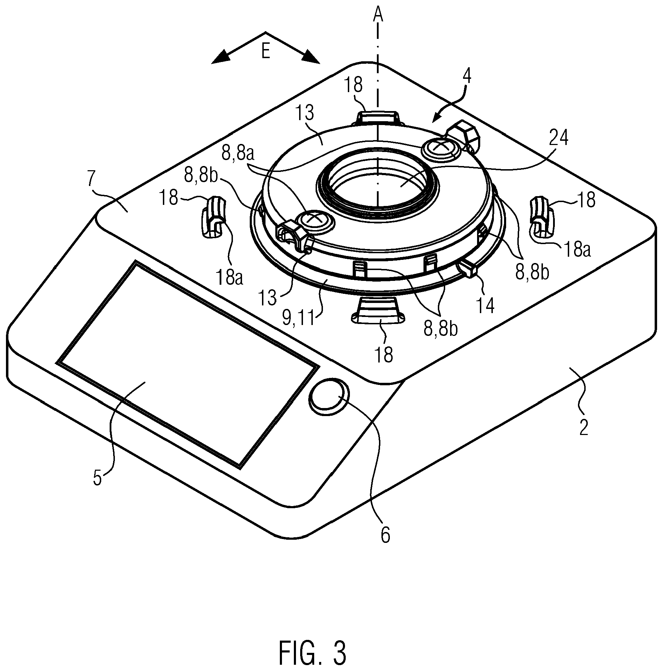

Fig. 3 zeigt ein alternatives Ausführungsbeispiel einer Küchengerätebasis 2 in perspektivischer Ansicht. Der Aufnahmebereich 4 ist wiederum auf einer Oberseite 7 der Küchengerätebasis 2 vorgesehen. Im Aufnahmebereich 4 ist das Verriegelungsmittel 9 mit dem rotierbaren Verriegelungselement 11 angeordnet. Das Verriegelungselement 11 ist auch bei diesem Ausführungsbeispiel zwischen der Oberseite 7 der Küchengerätebasis 2 und einem an der Küchengerätebasis 2 angeordneten Kontaktträgermodul 13 angeordnet. Am Kontaktträgermodul 13 sind die Leistungskontakte 8a sowie die Hilfskontakte 8b der elektrischen Schnittstelle 8 angeordnet.

Das Kontaktträgermodul 13 ist im Wesentlichen scheibenförmig mit einer zentralen Ausnehmung 24 ausgebildet. Die Leistungskontakte 8a sind auf einer Oberseite und die Hilfskontakte 8b an einer seitlichen Umfangsfläche angeordnet. Das Verriegelungselement 11, das hier als Verriegelungsring ausgebildet ist, ist rotierbar gehalten. An dem Verriegelungselement 11 sind zwei gegenüberliegend auf dem Umfang des Verriegelungselementes 11 angeordnete Mitnehmerkonturen 14 angeordnet, die hier als Mitnehmerrippen ausgebildet sind.

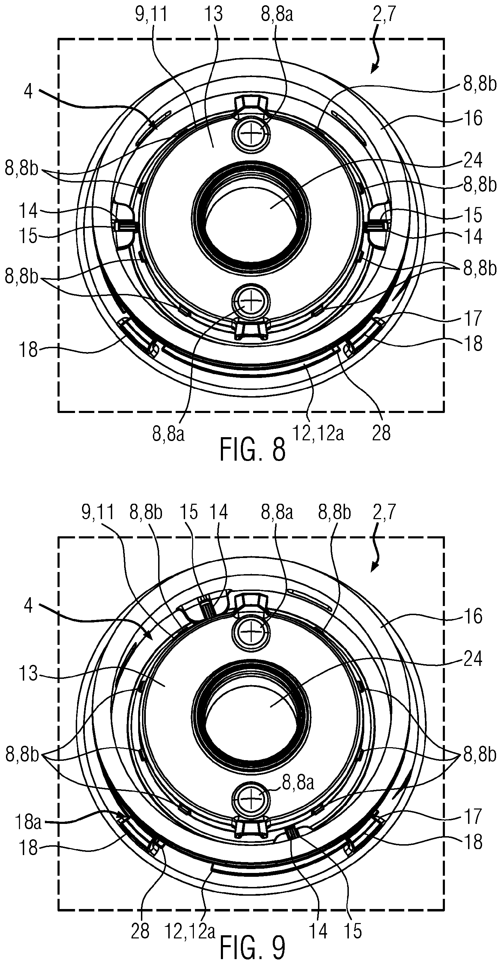

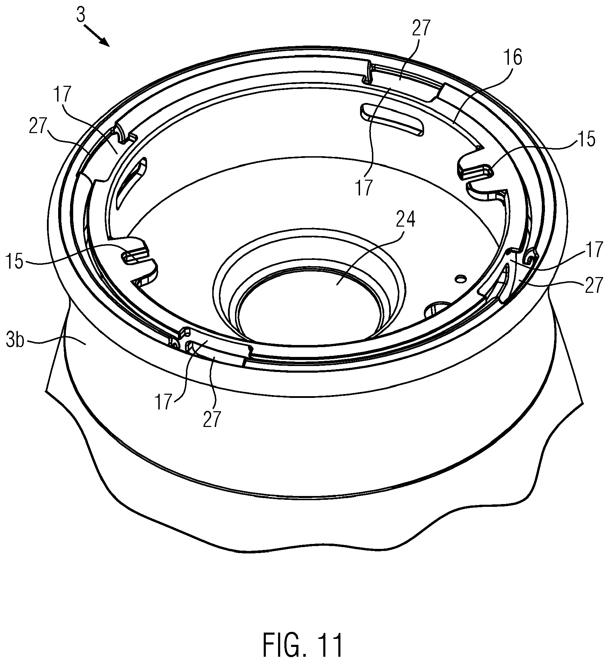

Im aufgebrachten Zustand eines Zubereitungsmoduls 3 in dem Aufnahmebereich 4 greifen die Mitnehmerkonturen 14 in, beispielsweise in Fig. 8 und 9 sowie in Fig. 11 dargestellte, Mitnehmergegenkonturen 15, hier in Form von Mitnehmerspalten, ein. Die Mitnehmerkontur 14 wirkt mit der Mitnehmergegenkontur 15 formschlüssig zusammen, so dass eine Rotationsbewegung, insbesondere um die Achse A, übertragbar ist. Die Mitnehmerkonturen 14 und Mitnehmerkonturen 15 sind derart angeordnet, dass das Zubereitungsmodul 3 in zwei unterschiedlichen Ausrichtungen im Aufnahmebereich 4 anordenbar ist. Das Verriegelungselement 11 wird von der Antriebseinheit 10 angetrieben, wobei im aufgebrachten Zustand eines Zubereitungsmoduls 3 das Verriegelungselement 11 ein Verriegelungsgegenelement 16 (siehe Fig. 8, 9, 10 und 14) zwischen einer in Fig. 8 dargestellten Freigabeposition und einer in Fig. 9 dargestellten Verriegelungsposition bewegt.

Das Verriegelungsgegenelement 16, das gemäß Fig. 8, Fig. 9, Fig. 10 und Fig. 11 als Verriegelungsgegenring ausgebildet ist, weist einen umlaufenden Verriegelungsabschnitt 12 auf, der von Ausnehmungen 17 unterbrochen ist. In der Freigabeposition gemäß Fig. 8 dienen die Ausnehmungen 17 dazu, dass an der Oberseite 7 der Küchengerätebasis 2 vorgesehene Verriegelungskonturen 18 die Verriegelungsabschnitte 12 hintergreifen können, um in der in Fig. 9 dargestellten Verriegelungsposition formschlüssig mit den Verriegelungsabschnitten 12 zusammenzuwirken. Die Verriegelungsabschnitte 12 weisen jeweils eine Verriegelungsfläche 12a auf, die im Verriegelungszustand gemäß Fig. 9 mit einer Verriegelungsgegenfläche 18a formschlüssig zusammenwirkt. Die Verriegelungskonturen 18 sind im Wesentlichen hakenförmig ausgebildet.

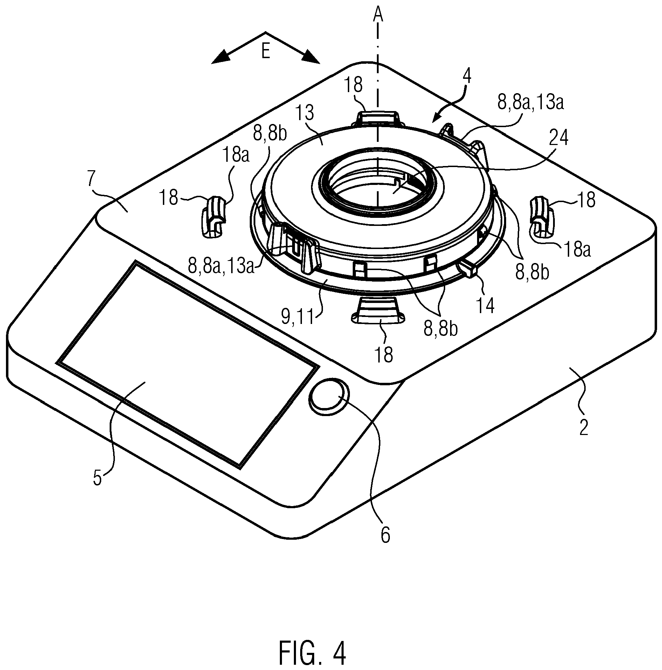

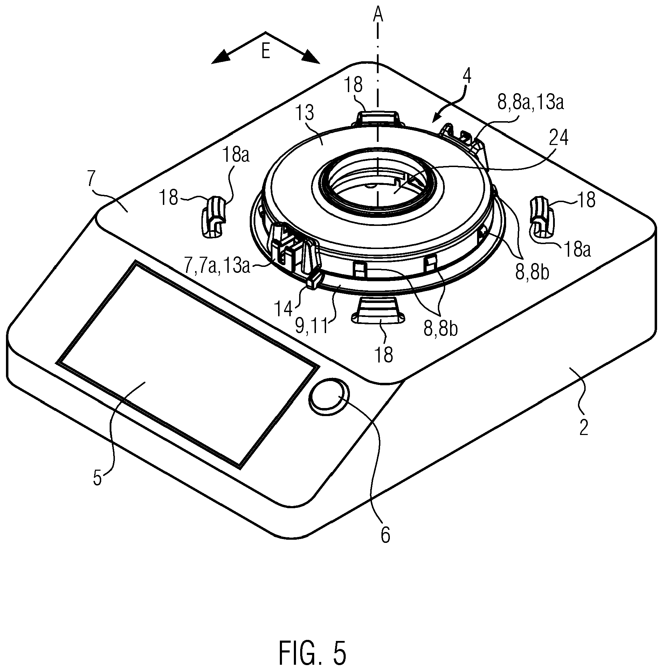

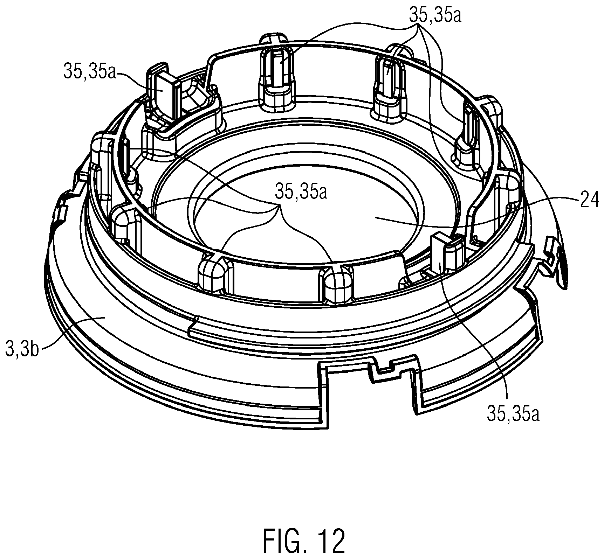

Fig. 4 und Fig. 5 zeigen ein weiteres Ausführungsbeispiel einer Küchengerätebasis 2, bei der im Aufnahmebereich 4 ein Verriegelungsmittel 9 mit einem Verriegelungselement 11 angeordnet ist. Das Verriegelungselement 11 ist als Verriegelungsring ausgebildet und - wie zu Fig. 3 beschrieben -, insbesondere um eine zentrale Achse A, rotierbar angeordnet. Das Verriegelungselement 11 ist unterhalb der Leistungskontakte 8a und der Hilfskontakte 8b bewegbar. Das Kontaktträgermodul 13 ist bei diesem Ausführungsbeispiel derart ausgebildet, dass die Leistungskontakte 8a auf Kontaktträgern 13a zwischen einer in Fig. 4 dargestellten Ruheposition, in der die Kontaktträger 13a vollständig in dem Kontaktträgermodul 13 verschwunden sind, und einer Kontaktposition, die in Fig. 5 dargestellt ist, bewegbar sind. In der Kontaktposition gemäß Fig. 5 stehen die Kontaktträger 13a mit den Leistungskontakten 8a zumindest teilweise aus dem Kontaktträgermodul 13 hervor, so dass diese - bei im Aufnahmebereich 4 angeordneten Zubereitungsmodul 3 - mit den Leistungsgegenkontakten 35a der elektrischen Gegenschnittstelle 35 des Zubereitungsmoduls 3, beispielhaft dargestellt in Fig. 12, kontaktiert sind.

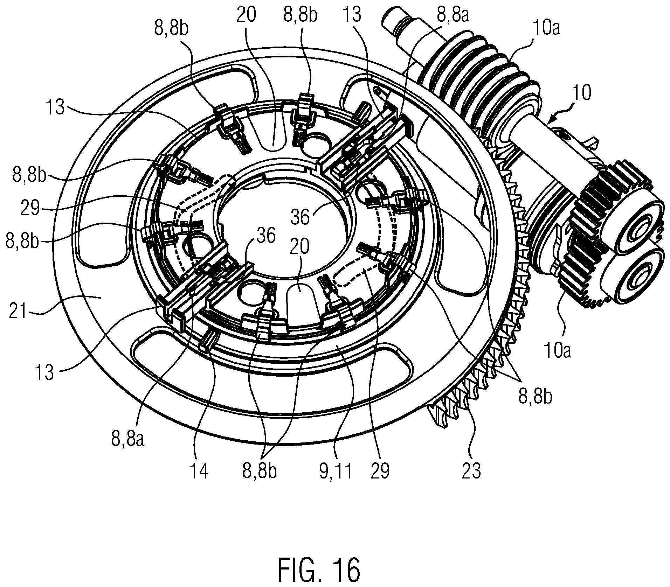

Bei dem Ausführungsbeispiel der Fig. 4 und Fig. 5 steht das Verriegelungselement 11 mit einem in Fig. 16 dargestellten Antriebshebel 21 in Wirkverbindung. Gemäß Fig. 16 ist unterhalb des Kontaktträgermoduls 13 das rotierbare Verriegelungselement 11 angeordnet. Der Antriebshebel 21 ist unterhalb des Verriegelungselements 11 angeordnet und ist im Wesentlichen ringförmig ausgebildet. Der Antriebshebel 21 ist mit dem Verriegelungselement 11 formschlüssig verbunden. Der Antriebshebel 21 weist eine gebogene Zahnleiste 23 auf, die mit der Antriebseinheit 10, insbesondere mit einem Zahnrad 10b der Antriebseinheit 10, in Verbindung steht. Eine Bewegung des Antriebshebels 21, die durch die Antriebseinheit 10 verursacht wird, bewirkt folglich eine identische Bewegung, hier Rotation, des Verriegelungselementes 11, nämlich zwischen einer Freigabeposition und einer Verriegelungsposition.

Bei dem Ausführungsbeispiel gemäß Fig. 16 weist der Antriebshebel 21 zudem zwei Kulissenausnehmungen 29 auf, die mit den Kontaktträgern 13a, insbesondere mit Antriebsvorsprüngen 36 der Kontaktträger 13a, derart zusammenwirken, dass die Kontaktträger 13a bei einer Bewegung des Antriebshebels 21, gleichzeitig mit einer Bewegung des Verriegelungselementes 11 zwischen einer Freigabeposition und einer Verriegelungsposition, von einer Ruheposition (siehe Fig. 4) in eine Kontaktposition (siehe Fig. 5) bewegt werden. Es ist auch vorgesehen, dass die Bewegungen nur zumindest teilweise gleichzeitig oder zeitversetzt erfolgen.

Wird das Verriegelungselement 11 aus der in Fig. 5 dargestellten Verriegelungsposition zurück in die in Fig. 4 dargestellte Freigabeposition verschwenkt, werden durch die Wirkung des Antriebshebels 21 automatisch die Kontaktträger 13a in das Kontaktträgermodul 13 eingefahren. Dadurch ist sichergestellt, dass die Leistungskontakte 8a berührsicher in dem Kontaktträgermodul 13 verwahrt sind, wenn das Zubereitungsmodul 3 aus dem Aufnahmebereich 4 entnehmbar ist. Die Bewegung zwischen Freigabeposition - siehe Fig. 4 - und einer Verriegelungsposition - Fig. 5 - erfolgt gesteuert durch eine Steuereinrichtung der Küchengerätebasis 2, die die Antriebseinheit 10 ansteuert.

Die Hilfskontakte 8b werden durch Aufsetzen des Zubereitungsmoduls 3 mit entsprechenden Hilfsgegenkontakten 35b (siehe Fig. 12) des Zubereitungsmoduls 3 kontaktiert. Bei dem Ausführungsbeispiel der Fig. 4 und 5 weist das Verriegelungselement 11 wieder Mitnehmerkonturen 14 auf, die mit entsprechenden Mitnehmergegenkonturen 15 am Zubereitungsmodul 3 zusammenwirken.

Im montierten Zustand in einer Küchengerätebasis 2 gemäß Fig. 4 und Fig. 5 erfolgt folglich gleichzeitig und insbesondere automatisch sowohl eine Verriegelung des Zubereitungsmoduls 3 mit der Küchengerätebasis 2 als auch eine elektrische Kontaktierung der Leistungskontakte 8a mit den Leistungsgegenkontakten 35a des Zubereitungsmoduls 3. Dieses Ausführungsbeispiel hat den Vorteil, dass die Kräfte zum Anordnen des Zubereitungsmoduls 3 im Aufnahmebereich 4 der Küchengerätebasis 2 deutlich reduziert werden, wodurch der Komfort für den Benutzer gesteigert wird. Zudem ist das Zubereitungsmodul 3 in zwei verschiedenen Ausrichtungen im Aufnahmebereich 4 anordenbar.

Fig. 6 zeigt ein Ausführungsbeispiel einer separat und von unten dargestellten Basisplatte 19, die im Montagezustand unterhalb des Kontaktträgermoduls 13 an der Oberseite 7 der Küchengerätebasis 2 angeordnet ist, beispielsweise für ein Ausführungsbeispiel gemäß Fig. 2 oder Fig. 3. Die Antriebseinheit 10 weist einen Motor 10a sowie ein mehrere Zahnräder 10b umfassendes Getriebe 10c auf. Die Antriebseinheit 10 ist an der Basisplatte 19 gehalten. Das in Fig. 7 separat dargestellte Verriegelungselement 11, hier ein Verriegelungsring, durchtritt mit zwei Stiften 20 die Basisplatte 19 etwa orthogonal. Die Antriebsstifte 20 sind gemäß Fig. 6 formschlüssig mit einem Antriebshebel 21 verbunden, indem die Antriebsstifte 20 in zugehörige Ausnehmungen 22 im Antriebshebel 21 eingreifen.

Der Antriebshebel 21 weist gemäß Fig. 6 eine bogenförmige Zahnleiste 23 auf, die mit dem Zahnrad 10b, hier ein Schneckenrad, der Antriebseinheit 10 in Verbindung steht. Wird das Zahnrad 10b der Antriebseinheit 10 rotiert, bewegt sich die Zahnleiste 23, wodurch der Antriebshebel 21 und damit das Verriegelungselement 11 auf der anderen Seite der Basisplatte 19 von einer Freigabeposition in eine Verriegelungsposition (siehe Fig. 9) bzw. aus einer Verriegelungsposition in eine Freigabeposition (siehe Fig. 8) bewegt wird.

Das Kontaktträgermodul 13 weist gemäß Fig. 8 und Fig. 9 eine zentrale Ausnehmung 24 auf, die von einer - nicht dargestellten - Antriebsschnittstelle zur Übertragung eines Drehmoments, beispielsweise auf ein Werkzeug in einem Zubereitungsmodul 3, durchtreten werden kann.

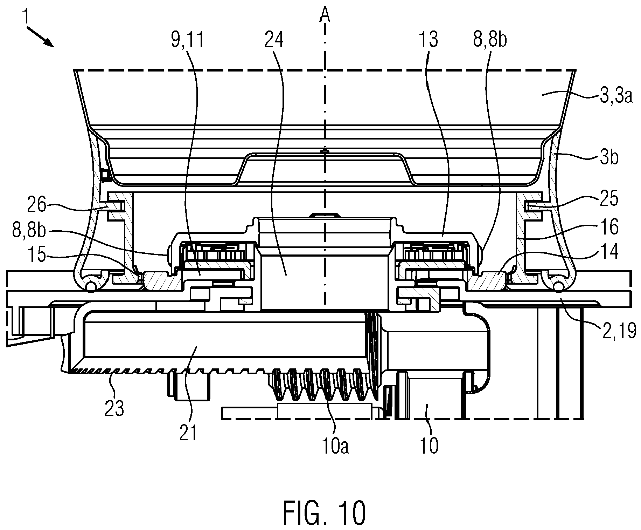

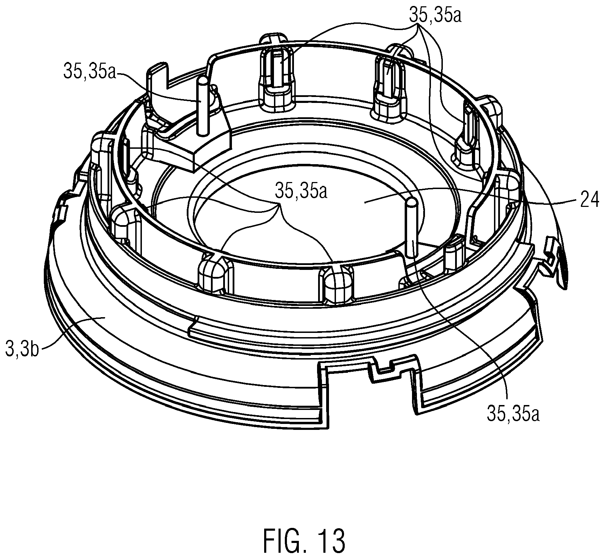

Fig. 10 zeigt einen Schnitt durch eine Basisplatte 19 einer Küchengerätebasis 2, insbesondere gemäß Fig. 3, mit aufgesetztem Zubereitungsmodul 3, das hier als Zubereitungsgefäß mit Zubereitungsinnenraum 3a ausgebildet ist. Das Verriegelungsgegenelement 16, hier in Form eines Verriegelungsgegenrings, weist eine umlaufende Nut 25 auf, die mit einem zugehörigen Steg 26 in einem Fußabschnitt 3b des Zubereitungsmoduls 3 derart zusammenwirkt, dass das Verriegelungsgegenelement 16 am Zubereitungsmodul 3 rotierbar ist. Gemäß Fig. 10 sind zur Veranschaulichung nur die Mittel zur mechanischen Verriegelung des Zubereitungsmoduls 3 mit der Küchengerätbasis 2 dargestellt. Für die elektrische Kontaktierung ist ferner die Anordnung einer elektrischen Gegenschnittstelle 36, insbesondere ähnlich der in Fig. 12 oder Fig. 13 dargestellten, erforderlich.

Wie bereits zu Fig. 8 und Fig. 9 beschrieben, wird die Rotation des Verriegelungsgegenelements 16 durch das Zusammenwirken der Mitnehmerkonturen 14 des Verriegelungselementes 11 mit den Mitnehmergegenkonturen 15 am Verriegelungsgegenelement 16 bewirkt. Die Rotation des Verriegelungselementes 11 wird wiederum durch eine Übertragung eines Drehmoments von dem Antriebshebel 21 bewirkt, der wiederum von der Antriebseinheit 10 bewegt wird - siehe beispielsweise Fig. 6.

Dieser Aufbau hat gegenüber dem Stand der Technik den Vorteil, dass mit einer extrem flachen Bauweise eine zuverlässige und automatische Verriegelung des Zubereitungsmoduls 3 mit der Küchengerätebasis 2 erfolgen kann. Die zentrale Ausnehmung 24 kann von einer mechanischen Antriebsschnittstelle durchtreten werden.

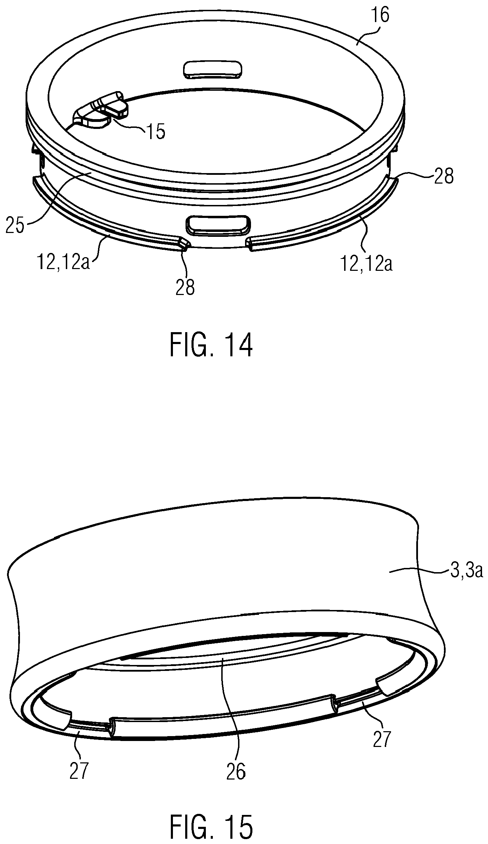

Fig. 11 zeigt ein Ausführungsbeispiel eines Zubereitungsmoduls 3 in teilweiser perspektivischer Ansicht. Das Zubereitungsmodul 3 ist im Wesentlichen gemäß dem Ausführungsbeispiel der Fig. 10 ausgebildet. Zur Veranschaulichung sind nur die Mittel zur mechanischen Verriegelung des Zubereitungsmoduls 3 mit der Küchengerätbasis 2 dargestellt. Für die elektrische Kontaktierung ist ferner die Anordnung einer elektrischen Gegenschnittstelle 8, insbesondere ähnlich der in Fig. 11 oder Fig. 14 dargestellten, erforderlich. Die Ausnehmung 24 ist von einer anordenbaren Antriebsschnittstelle - nicht dargestellt - durchtretbar, die beispielsweise der Übertragung eines Drehmoments von einer Arbeitseinheit, z. B. eines Motors, der Küchengerätebasis 2 dient.

Gemäß Fig. 11 ist das Verriegelungsgegenelement 16 rotierbar in einem Fußabschnitt 3b des Zubereitungsmoduls 3 gelagert. In dem Verriegelungsgegenelement 16 sind Ausnehmungen 17 vorgesehen, die in der dargestellten Freigabeposition mit Ausnehmungen 27 im Fußabschnitt 3b des Zubereitungsmoduls 3 korrespondieren, um den Durchtritt der Verriegelungskonturen 18 beim Anordnen des Zubereitungsmoduls 3 im Aufnahmebereich 4 zu ermöglichen. Die Mitnehmergegenkonturen 15, hier als Mitnehmerspalte ausgebildet, sind auf dem Umfang des Verriegelungsgegenelementes 16 gegenüberliegend ausgebildet, so dass das Zubereitungsmodul 3 in zwei verschiedenen Ausrichtungen auf die Küchengerätebasis 2 aufsetzbar ist. Das Verriegelungsgegenelement 16 wirkt, wie zu den Fig. 4 und Fig. 5 sowie Fig. 8 und Fig. 9 beschrieben, mit der Küchengerätebasis 2 zum Verriegeln zusammen.

Fig. 12 zeigt ein Ausführungsbeispiel eines Teils eines Fußabschnitts 3b für ein Zubereitungsmodul 3. Der Fußabschnitt 3b weist eine elektrische Gegenschnittstelle 35 auf, die zwei Leistungskontakte 8a in Form von Kontaktmessern und acht Hilfsgegenkontakte 35b in Form von Kontaktflächen aufweist. Ein derartiger Fußabschnitt 3b kann beispielsweise mit einer Küchengerätebasis 2 gemäß Fig. 4 und Fig. 5 zusammenwirken. Der Fußabschnitt 3b ist an Zubereitungsmodulen 3 mit unterschiedlichen Funktionen anordenbar. Die Hilfsgegenkontakte 35b werden beim Anordnen in dem Aufnahmebereich 4 kontaktiert, die Leistungsgegenkontakte 35a erst dann, wenn die Kontaktträger 13a in der Kontaktposition sind (siehe Fig. 5).

Fig. 13 zeigt ein weiteres Ausführungsbeispiel eines Teils eines Fußabschnitts 3b für ein Zubereitungsmodul 3. Der Fußabschnitt 3b weist eine elektrische Gegenschnittstelle 35 auf, die zwei Leistungskontakte 8a in Form von Kontaktstiften und acht Hilfsgegenkontakte 35b in Form von Kontaktflächen aufweist. Ein derartiger Fußabschnitt 3b kann beispielsweise mit einer Küchengerätebasis 2 gemäß Fig. 2, Fig. 3, Fig. 8 und Fig.9 zusammenwirken. Der Fußabschnitt 3b ist an Zubereitungsmodulen 3 mit unterschiedlichen Funktionen anordenbar. Die Hilfsgegenkontakte 35b werden beim Anordnen in dem Aufnahmebereich 4 kontaktiert, die Leistungsgegenkontakte 35a zeitlich nach den Hilfsgegenkontakten 35b.

Fig. 14 zeigt das Verriegelungsgegenelement 16 für ein Zubereitungsmodul 3 gemäß Fig. 8, Fig.9 und Fig. 11 in perspektivischer Ansicht. Der Verriegelungsabschnitt 12 mit den Verriegelungsflächen 12a wird von den Ausnehmungen 17 unterbrochen. In Abhängigkeit von der Drehrichtung zwischen Freigabeposition und Verriegelungsposition weisen die Verriegelungsabschnitte 12 Einführschrägen 28 auf, die das formschlüssige Zusammenwirken mit den Verriegelungskonturen 18 an der Küchengerätebasis 2 - siehe beispielsweise Fig. 3, Fig. 4 und Fig. 5 -vereinfachen.

Fig. 15 zeigt ein Ausführungsbeispiel eines Teils eines Fußabschnitts 3b eines Zubereitungsmoduls 3. Die Ausnehmungen 27 dienen dem Durchtreten der Verriegelungskonturen 18 der Küchengerätebasis 2 beim Anordnen eines Zubereitungsmoduls 3 im Aufnahmebereich 4. Der Steg 26 wirkt mit der Nut 25 - siehe Fig. 12 - derart zusammen, dass das Verriegelungsgegenelement 16 in Form des Verriegelungsrings an dem Fußabschnitt 3b des Zubereitungsmoduls 3 rotierbar gelagert ist.

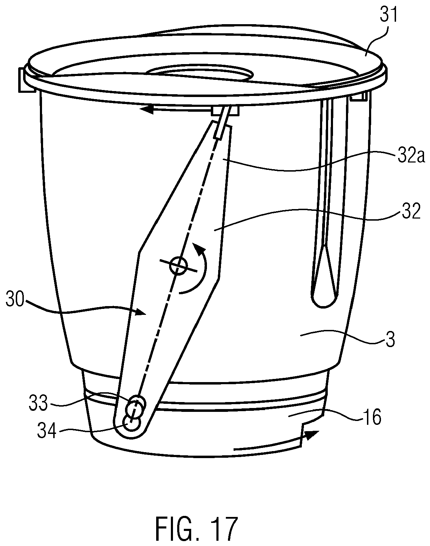

Fig. 17 zeigt ein Ausführungsbeispiel eines Zubereitungsmoduls in teilweise montiertem Zustand. Mit dem Verriegelungsgegenelement 16 wirkt eine Deckelverriegelungseinrichtung 30 zusammen, die bei einer Rotation des Verriegelungsgegenelementes 16 von einer Freigabeposition in eine Verriegelungsposition ebenfalls einen den Zubereitungsraum 3a verschließenden Deckel 31 formschlüssig mit dem Zubereitungsmodul 3 verriegelt. Es sind auch Ausführungsbeispiele vorgesehen, bei denen die Deckelverriegelungseinrichtung 30 derart ausgebildet ist, dass in einem ersten Schritt das Zubereitungsmodul 3 mit der Küchengerätebasis 2 verriegelt wird, so dass der Deckel 31 bei verriegeltem Zubereitungsmodul entnommen werden kann, und dass eine Verriegelung des Deckels 31 mit dem Zubereitungsmodul 3 erst in einem zweiten Schritt erfolgt. Die Deckelverriegelungseinrichtung 30 weist ein schwenkbar gelagertes Funktionselement 32 auf, das von einer dargestellten Freigabeposition in Pfeilrichtung in eine Verriegelungsposition bewegbar ist. Am Verriegelungsgegenelement 16 ist ein Aktorstift 33 angeordnet, der in eine korrespondierende Ausnehmung 34 am Funktionselement 32 eingreift, um das Funktionselement 32 zu verschwenken. Der Kopfbereich 32a des Funktionselementes 32 rotiert dabei den Deckel 31, so dass dieser formschlüssig mit dem Zubereitungsmodul 3 verriegelt.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Küchengerät
- 2: Küchengerätebasis
- 3: Zubereitungsmodul
- 3a: Zubereitungsinnenraum
- 3b: Fußabschnitt
- 4: Aufnahmebereich
- 5: Bedien- und Anzeigeeinrichtung
- 6: Bedienmittel
- 7: Oberseite der Küchengerätebasis 2
- 8: Elektrische Schnittstelle
- 8a: Leistungskontakte
- 8b: Hilfskontakte
- 9: Verriegelungsmittel
- 10: Antriebseinheit
- 10a: Motor
- 10b: Zahnrad
- 10c: Getriebe
- 11: Verriegelungselement
- 12: Verriegelungsabschnitte
- 12a: Verriegelungsfläche
- 13: Kontaktträgermodul
- 13a: Kontaktträger
- 14: Mitnehmerkonturen
- 15: Mitnehmergegenkonturen
- 16: Verriegelungsgegenelement
- 17: Ausnehmungen
- 18: Verriegelungskonturen
- 18a: Verriegelungsgegenfläche
- 19: Basisplatte
- 20: Antriebsstifte
- 21: Antriebshebel
- 22: Ausnehmungen
- 23: Zahnleiste
- 24: Zentrale Ausnehmung
- 25: Nut
- 26: Steg
- 27: Ausnehmungen
- 28: Einführschrägen
- 29: Kulissenausnehmungen
- 30: Deckelverriegelungseinrichtung
- 31: Deckel
- 32: Funktionselement
- 32a: Kopfbereich
- 33: Aktorstift
- 34: Ausnehmung
- 35: Elektrische Gegenschnittstelle von 3
- 35a: Leistungsgegenkontakte
- 35b: Hilfsgegenkontakte
- 36: Antriebsvorsprünge

- A: Achse
- E: Verriegelungsebene

## Patentansprüche

1. Küchengerätebasis (2), mit mindestens einem Aufnahmebereich (4) für mindestens ein Zubereitungsmodul (3), wobei der Aufnahmebereich (4) mindestens ein Verriegelungsmittel (9) zum mechanischen Verriegeln des Zubereitungsmoduls (3) aufweist,
**dadurch gekennzeichnet, dass**
das Verriegelungsmittel (9) mindestens eine Antriebseinheit (10) und mindestens ein bewegbar gehaltenes Verriegelungselement (11) aufweist, dass das Verriegelungselement (11) zumindest mittelbar mittels der Antriebseinheit (10) zumindest zwischen einer Freigabeposition und einer Verriegelungsposition bewegbar ist, dass in der Freigabeposition das Zubereitungsmodul (3) in mindestens zwei unterschiedlichen Ausrichtungen in dem Aufnahmebereich (4) anordenbar ist, und dass in der Verriegelungsposition eine Verriegelung des Zubereitungsmoduls (3) mit der Küchengerätebasis (2) bewirkt ist.

2. Küchengerätebasis (2) nach Anspruch 1,
**dadurch gekennzeichnet, dass**
das Verriegelungselement (11) mittels der Antriebseinheit (10), insbesondere zumindest mittelbar oder unmittelbar, rotierbar ist, vorzugsweise dass das Verriegelungselement (11) als Verriegelungsring ausgebildet ist.

3. Küchengerätebasis (2) nach Anspruch 1 oder 2,
**dadurch gekennzeichnet, dass**
mindestens ein Antriebshebel (21) vorhanden ist, dass die Antriebseinheit (10) mit dem Antriebshebel (21) zusammenwirkt, um das Verriegelungselement (11) zu bewegen, insbesondere dass die Antriebseinheit (10) mindestens einen Motor (10a) und mindestens ein Zahnrad (10b), insbesondere mindestens ein Schneckenrad, aufweist, und dass das Zahnrad (10b) mit dem Antriebshebel (21) in Wirkverbindung steht.

4. Küchengerätebasis (2) nach Anspruch 3,
**dadurch gekennzeichnet, dass**
das Verriegelungselement (11), insbesondere formschlüssig, mit dem Antriebshebel (21) verbunden ist, vorzugsweise dass das Verriegelungselement (11) zum Ausbilden der Verbindung einer Basisplatte (19) der Küchengerätebasis (2) zumindest teilweise durchtritt.

5. Küchengerätebasis (2) nach einem der Ansprüche 1 bis 4,
**dadurch gekennzeichnet, dass**
das Verriegelungselement (11) in einer Verriegelungsebene (E) bewegbar ist, vorzugsweise dass die Verriegelungsebene (E) im Wesentlichen parallel zu einer Standfläche der Küchengerätebasis (2), insbesondere zu einer Oberseite (7) der Küchengerätebasis (2), ausgerichtet ist.

6. Küchengerätebasis (2) nach einem der Ansprüche 1 bis 5,
**dadurch gekennzeichnet, dass**
das Verriegelungselement (11) mindestens einen Verriegelungsabschnitt (12), insbesondere mindestens zwei Verriegelungsabschnitte (12) aufweist, und dass der Verriegelungsabschnitt (12) in der Verriegelungsposition bei dem in dem Aufnahmebereich (4) angeordneten Zubereitungsmodul (3) mit mindestens einem Verriegelungsgegenabschnitt des Zubereitungsmoduls (3) formschlüssig verriegelnd zusammenwirkt.

7. Küchengerätebasis (2) nach einem der Ansprüche 1 bis 5,
**dadurch gekennzeichnet, dass**
das Verriegelungselement (11) mindestens eine Mitnehmerkontur (14), insbesondere eine Mitnehmerrippe, aufweist, und dass die Mitnehmerkontur (14) zum, vorzugsweise formschlüssigen, Zusammenwirken mit einer Mitnehmergegenkontur (15), insbesondere einem Mitnehmerspalt, an einem Verriegelungsgegenelement (16) am Zubereitungsmodul (3) ausgebildet ist.

8. Küchengerätebasis (2) nach einem der Ansprüche 1 bis 7,
**dadurch gekennzeichnet, dass**
mindestens eine elektrischen Schnittstelle (8) vorhanden ist, dass die elektrische Schnittstelle (8) mindestens zwei Leistungskontakte (8a) und mindestens einen Hilfskontakt (8b) aufweist, und dass mindestens einer der Leistungskontakte (8a) und/oder mindestens der Hilfskontakt (8b) der elektrischen Schnittstelle (8), insbesondere während und/oder nach dem Anordnen des Zubereitungsmoduls (3) in dem Aufnahmebereich (4), vorzugsweise mittels der Antriebseinheit (10), aus einer Ruheposition zumindest in Richtung einer Kontaktposition an der Küchengerätebasis (2) bewegbar ist.

9. Küchengerätebasis (2) nach Anspruch 8,
**dadurch gekennzeichnet, dass**
das Bewegen des mindestens einen Leistungskontakts (8a) und/oder zumindest des Hilfskontakts (8b) zumindest mittelbar durch den Antriebshebel (21) bewirkt wird, insbesondere dass das Verriegelungselement (11) zumindest teilweise gleichzeitig, insbesondere vollständig gleichzeitig, mit dem mindestens einen Leistungskontakt (8a) und/oder zumindest mit dem Hilfskontakt (8b) bewegt wird, um ein Zubereitungsmodul (3) zu verriegeln, oder dass das Verriegelungselement (11) zeitlich vor oder nach dem mindestens einen Leistungskontakt (8a) und/oder zumindest dem Hilfskontakt (8b) bewegt wird, um ein Zubereitungsmodul (3) zu verriegeln.

10. Zubereitungsmodul (3) zum Anordnen in einem Aufnahmebereich (4) einer Küchengerätebasis (2), insbesondere nach einem der Ansprüche 1 bis 9,
**dadurch gekennzeichnet, dass**
ein rotierbar gelagertes Verriegelungsgegenelement (16) vorhanden ist, dass das Verriegelungsgegenelement (16) von einem Verriegelungselement (11) der Küchengerätebasis (2) zumindest zwischen einer Verriegelungsposition und einer Freigabeposition bewegbar ist, und dass das Verriegelungsgegenelement (16) derart ausgebildet ist, dass das Verriegelungselement (11) der Küchengerätebasis (2) an mindestens zwei Positionen an dem Verriegelungsgegenelement (16) zum Bewegen formschlüssig eingreifen kann.

11. Zubereitungsmodul (3) nach Anspruch 10,
**dadurch gekennzeichnet, dass**
das Zubereitungsmodul (3) mindestens eine elektrische Gegenschnittstelle (35) zur Kontaktierung mit einer elektrischen Schnittstelle (8) der Küchengerätebasis (2) aufweist und/oder dass das Verriegelungsgegenelement (16), insbesondere Verriegelungsgegenring, mindestens zwei Mitnehmergegenkonturen (15) aufweist, insbesondere dass die Mitnehmergegenkonturen (15) jeweils als Mitnehmerspalt ausgebildet sind, vorzugsweise dass die Mitnehmergegenkonturen (15) gegenüberliegend zueinander angeordnet sind.

12. Zubereitungsmodul (3) nach Anspruch 10 oder 11,
**dadurch gekennzeichnet, dass**
das Verriegelungsgegenelement (16) mindestens eine umlaufende Nut (25) aufweist, und dass das Verriegelungsgegenelement (16) mittels der Nut (25) rotierbar gelagert ist, insbesondere in einem Fußabschnitt (3b) des Zubereitungsmoduls (3), vorzugsweise dass die Nut (25) mit mindestens einem umlaufenden Steg (26) zusammenwirkt.

13. Zubereitungsmodul (3) nach einem der Ansprüche 10 bis 12,
**dadurch gekennzeichnet, dass**
mindestens ein Zubereitungsraum (3a) vorhanden ist, dass der Zubereitungsraum (3a) mit mindestens einem Deckel (31) verschließbar ist, dass mindestens eine Deckelverriegelungseinrichtung (2) vorhanden ist, und dass das Verriegelungsgegenelement (11) mit der Deckelverriegelungseinrichtung (30) in Wirkverbindung steht, so dass mit der Deckelverriegelungseinrichtung (30) zumindest in der Verriegelungsposition des Verriegelungsgegenelements (16) eine Verriegelung mindestens eines an dem Zubereitungsmodul (3) anordenbaren Deckels (31) bewirkbar ist.

14. Küchengerät (1) mit mindestens einer Küchengerätebasis (2), insbesondere nach einem der Ansprüche 1 bis 9 und mindestens einem Zubereitungsmodul (3), insbesondere nach einem der Ansprüche 10 bis 13.

15. Küchengerät (1) nach Anspruch 14,
**dadurch gekennzeichnet, dass**
das Verriegelungsgegenelement (16), insbesondere die Verriegelungsabschnitte (12) des Verriegelungsgegenelements (16), zur Verriegelung des Zubereitungsmoduls (3) mit der Küchengerätebasis (2) mit Verriegelungskonturen (18) an der Küchengerätebasis (2), insbesondere im Aufnahmebereich (4), zusammenwirken.
